# EUROPEAN PATENT SPECIFICATION

(11) **EP 0 703 931 B1**
(45) Date of publication and mention of the grant of the patent: **01.10.2003**
(21) Application number: 94920665.0
(22) Date of filing: 02.05.1994
(51) Int. Cl.: C08F 220/32, C08F 283/10, C08G 59/68

(54) **VIBRATION DAMPING CONSTRUCTIONS USING THERMALLY POLYMERIZED EPOXIDES**
SCHWINGUNGSDÄAMPFENDE KONSTRUKTIONEN, DIE THERMISCH POLYMERISIERTE EPOXIDE VERWENDEN
CONSTRUCTIONS AMORTISSANT LES VIBRATIONS COMPRENANT DES RESINES EPOXYDES A POLYMERISATION THERMIQUE

(30) Priority: 16.06.1993 US 78446
(43) Date of publication of application: 03.04.1996
(73) Proprietor: MINNESOTA MINING AND MANUFACTURING COMPANY, St. Paul, Minnesota 55133-3427 (US)
(72) Inventor: GORODISHER, Ilya, Saint Paul, MN 55133-3427 (US); DRATH, David, J., Saint Paul, MN 55133-3427 (US); PALAZZOTTO, Michael, C., Saint Paul, MN 55133-3427 (US)
(74) Representative: VOSSIUS & PARTNER
(86) International application number: US9404829
(87) International publication number: WO94029358

(56) References cited:
- EP-A- 0 306 162
- EP-A- 0 344 910
- EP-A- 0 542 716
- EP-A- 0 552 782
- WO-A-93/15125
- WO-A-93/15333
- US-A- 4 426 431

## Description

This invention relates to vibration-damping constructions and more particularly to vibration-damping constructions prepared from at least a single layer of a polymerized epoxy-acrylate thermoset resin, wherein the epoxy is thermally polymerized.

As technology moves toward energy conservation with the concomitant drive towards light weight structures that move at faster speeds and operate at higher temperatures, acoustic and vibratory responses become larger and less desirable.

In general, damping materials are applied to structures and component parts in devices to attenuate resonant vibrations thereby reducing noise and vibrational fatigue. This is often accomplished by attaching a viscoelastic material of appropriate damping characteristics to the vibrating structure. Vibrational forces cause the viscoelastic material in constrained layers to undergo shear deformation where some of its inelastic deformation energy is converted to heat and then dissipated (mechanical hysteresis). Under cyclic loading, heat generated results in a temperature rise until heat generated per cycle is equal to heat dissipated through conduction, convection and radiation. The ability of a material to damp is measured by its ability to convert vibrational energy to heat energy.

It has long been known that the vibration of component parts of devices and structures that vibrate under the influence of an applied internal or external force can be substantially reduced by the attachment of a layer of viscoelastic material. See for example, U.S. Patent Nos. 3,640,836, 3,847,726, 3,833,404 and 4,447,493.

Although epoxies have traditionally been used as constraining layers in damping constructions since they do not exhibit any significant damping due to their highly crosslinked networks, there are several examples of compositions using an epoxy or mixture of epoxies in combination with other materials for use as vibration damping materials. Some examples include (1) damping composite comprising a resin matrix of about 20 to 43% by weight of a flexible epoxy, about 12 to 35% by weight of a stiff epoxy, about 35 to 61% by weight of a flexible crosslinking agent and about 20 to 50% by weight of a high modulus graphite fiber, (2) a process of using compositions comprising certain thermoplastic elastomeric polymers for damping and damping compositions comprising soft thermoset polymer containing microscopically discrete segments of said thermoplastic elastomeric polymers and (3) a method for preparing epoxy/acrylate damping materials by a photoactivation process.

Interpenentrating networks (IPNs) have been previously shown to be useful as vibration damping materials. IPNs generally consist of two or more distinct, mechanically interlocked polymer networks, that can be prepared either in one step (simultaneous IPNs), or in multi-steps (sequential IPNs). During IPN formation a number of phases, comprised of varying amounts of each component can be formed. Morphology is a term used to describe such an aggregate molecular architecture of the IPNs.

Previously disclosed multi color curing process for curing epoxy/acrylates suffers from several complicating factors that render its implementation in the production of constrained layer dampers rather cumbersome. Firstly, a typical vibration damping treatment calls for opaque, commonly metallic, constraining layers. The multi-color curing process can not be easily utilized, since the light, or a similar photoradiation, can not be readily admitted through metal plates. Furthermore, radiation cure is not commonly available at metal coil coating facilities, where constrained layer dampers are typically laminated or coated.

Secondly, IPNs comprising higher T_{g} thermosets can not be prepared with photocure alone. Such networks require thermal post-cure after photoactivation of the cure. Thus, the two color cure in this case is actually comprised of three steps: photocure of the low T_{g} network, photo-activation of the higher T_{g} polymer, and finally, its thermal cure.

In one aspect, the invention provides a vibration damping construction comprising:
a) a first substrate;
b) a cured viscoelastic layer coated on at least one surface of the first substrate, the cured viscoelastic layer being obtainable from a curable composition comprising a mixture of at least one free radically polymerizable monomer, at least one epoxy functional resin, at least one free radical polymerization initiator, a thermally-initiated cationic catalyst system comprising at least one salt of an organometallic cation and at least one stabilizing additive having segments or central nucleus of a formula selected from the group consisting of 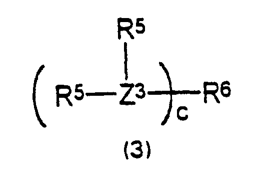 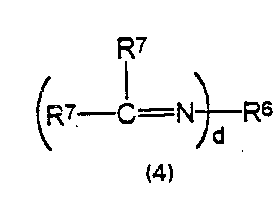 wherein
   Z³ is nitrogen, phosphorous, arsenic or antimony;
   R⁵ is a radical moiety that can be the same or different and is selected from substituted and unsubstituted C₁ to C₁₀ alkyl groups, substituted and unsubstituted groups of one to four aromatic rings, wherein two to four rings can be fused or unfused rings;
   R⁷ is hydrogen or R⁵;
   R⁶ is R⁵ or a divalent group (as when c or d = 2) selected from alkylene having 3 to 10 carbon atoms and phenylene groups; furthermore when R⁶ is R⁵, R⁵ and
   R⁶ can be taken together to form a cyclic ring having 5 to 7 ring atoms;
   c is 1 or 2; and
   d is 1 or 2;
   further wherein when cured the curable mixture provides a vibration damping material with an interpenetrating network comprising a semi-phase separated morphology; and
c) optionally, a second substrate positioned over the viscoelastic layer such that the viscoelastic layer is sandwiched between the first and second substrates.
The curable composition can further comprise at least one hydroxyl-containing material.

In one embodiment of the vibration damping construction the organometallic cation is selected from a class of substituted and unsubstituted aromatic compounds based on a benzene or cyclopentadienyl nucleus, the metal is a transition metal, and the anion is tetrafluoroborate, hydroxypentafluoroantimonate, trifluoromethanesulfonate, hexafluorophosphate, hexafluoroarsenate, or hexafluoroantimonate.

Optionally, at least one hydroxyl containing material; and optionally, additional adjuvants are also present.

In another aspect of this invention, a vibration damping construction is provided comprising:
(a) a first substrate;
(b) the cured viscoelastic layer as described above coated on at least one surface of the first substrate;
(c) optionally, a second substrate positioned over the viscoelastic layer such that the layer is sandwiched between the first and second substrates.

In another aspect, this invention describes a method for preparing a vibration and sound absorbing construction comprising the steps of:
(1) providing a first substrate;
(2) preparing a curable mixture as described above comprised of a (a) at least one free radically polymerizable monomer, (b) at least one epoxy functional resin, (c) at least one free radical polymerization initiator, and (d) thermally-initiated catalyst system comprising
   (i) at least one salt of an organometallic cation having the formula;

      [(L¹)ₘ(L²)ₚM]^{+q} Xₙ

      wherein:
      - M: is selected from the group consisting of Cr, Mo, W, Mn, Re, Fe, Ru, and Os;
      - L¹: represents ligands contributing π-electrons that can be selected from substituted and unsubstituted aromatic compounds and substituted and unsubstituted heterocyclic aromatic compounds, and capable of contributing six π-electrons to the valence shell of M;
      - L²: represents ligands contributing π-electrons that can be selected from substituted and unsubstituted cyclopentadienyl and indenyl anions, and capable of contributing six π-electrons to the valence shell of M;
      - m and p: are integers having a value of 0 or 2, such that, when m is equal to 2, each L¹ may be the same or different ligands and p is equal to 0; and when p is equal to 2, each L² may be the same or different ligands and m is equal to 0, provided the sum of (m + p) is equal to 2;
      - q: is an integer having a value of 1 or 2, the residual charge of the complex cation;
      - X: is an anion selected from organic sulfonate anions selected from the group consisting of CH₃SO₃⁻, CF₃SO₃⁻, C₆H₅SO₃⁻, p-toluenesulfonate, p-chlorobenzenesulfonate and related isomers, and halogen-containing complex anions of a metal or metalloid selected from the group consisting of BF₄⁻, AsF₆⁻, PF₆⁻, SbF₅OH⁻, SbF₆⁻, and CF₃SO₃⁻; and
      - n: is an integer having a value of 1 or 2, the number of complex anions required to neutralize the charge q on the complex cation, and
   (ii) at least one stabilizing additive as described above;
(3) coating the curable mixture onto the first substrate;
(4) exposing the coating to energy to at least partially cure component (a) by activating the free radical initiator;
(5) laminating the partially cured coating between the first substrate, and a second substrate; and
(6) exposing the laminate to a temperature sufficient to cure component (b) to provide a fully cured coating laminated between the first and second substrates.

Alternatively, the first substrate can be a releasable carrier web, wherein component (a) is at least partially cured, and then laminated onto a second substrate, after which the releasable carrier web is removed and a third substrate is added to form a sandwich with the viscoelastic material between the second and third substrate. This laminate is then exposed to a temperature sufficient to cure component (b) to provide a fully cured coating.

The process of the present invention has a unique advantage in preparation of a constrained layer vibration damping article, where photopolymerization is not possible.

The process provides kinetic control over the polymerization and phase separation by allowing a controllable sequential thermal activation of catalysts to permit polymerization of each component separately. One means of controlling the kinetics of the reaction is by exerting control over the viscosity of the free radically polymerizable monomer. Such control can be attained through partially polymerizing the free radically polymerizable monomer.

Furthermore, the thermal polymerization process of the present invention provides the ability to polymerize monofunctional acrylates in the presence of oxygen, thus eliminating the need to coat and cure the polymerization mixture in an inert atmosphere.

Advantageously, the viscoelastic damping polymeric materials can be prepared either solely by use of heat or via a sequential combination of radiation and heat by utilizing thermal catalysts. The processes taught herein have the further advantage in the ease of geometric fabrication of the constrained layer damping devices or dampers, which need not be viscoelastic at room temperature, for high temperature damping. Construction of constrained layer dampers is greatly facilitated by thermally curing the epoxy/acrylate mixture between two opaque sheets. Methods for curing a liquid coating or a pressure sensitive adhesive *in situ* between two opaque constraining layers are described below.

As used in this application:
"(meth)acrylate-containing" means materials that are essentially free of (meth)acrylic acid, but contain an (meth)acrylate monomer, a mixture of (meth)acrylate monomers, or an (meth)acrylate-epoxy mixture, and further (meth)acrylate and (meth)acrylic include acrylate and methacrylate and acrylic and methacrylic, respectively;
"B-stage" means an intermediate stage in a thermosetting resin reaction in which the material softens when heated, and swells, but does not dissolve in certain liquids. (From ASTM Standard D907-91b);
"bireactive monomer" means a monomer that contains at least two free radically polymerizable groups or two cationically polymerizable groups and does not contain both types of groups, simultaneously;
"bifunctional monomer" means a monomer that contains both at least one free radically polymerizable group and at least one cationically polymerizable group;
"constrained layer" means a damping configuration comprising the component or structure to be damped, a viscoelastic layer, and one or more constraining layers;
"cure" and "polymerize" are used interchangeably in this application to indicate a chemical reaction, usually carried out with a catalyst, heat, light, or any combination of the two, in which many relatively simple molecules combine to form a chain-like macromolecule;
"epoxy-acrylate thermoset resin composition" is used to indicate uncured compositions, comprising at least one free radically polymerizable monomer, at least one epoxy monomer, at least one free radical initiator, and a thermally activatable curing system, and other adjuvants such as fillers, dyes, flame retardants, such that the uncured compositions can be cured to a "cured epoxy-acrylate thermoset resin";
"IPN" refers to interpenetrating networks (IPN) wherein all the components are crosslinked and physically interlocked and to semi-interpenetrating networks (sIPN) wherein only some of the components are crosslinked;
"T_{g}" means glass-rubber transition temperature;
"thermoplastic" means a high polymer that softens when exposed to heat and solidifies when cooled to room temperature; and
"thermoset" means a high polymer that solidifies or "sets" irreversibly when cured and this property is typically associated with a crosslinking reaction of the constituents.

### Brief Description of the Drawings

Figures 1 (a-c) schematically illustrate a fully miscible interpenetrating network (IPN) morphology:
   1 (a): schematically represents phase separation of the polymer chain in a miscible IPN;
   1 (b): schematically represents a dynamic mechanical analysis (DMA) curve of this morphology; and
   1 (c): schematically represents a transmission electron micrograph (TEM) of this morphology.
Figures 2 (a-c) schematically illustrate a phase separated interpenetrating network (IPN) morphology:
   2 (a): schematically represents phase separation of the polymer chain in a phase separated IPN;
   2 (b): schematically represents a DMA curve of this morphology; and
   2 (c): schematically represents a TEM of this morphology.
Figures 3 (a-c) schematically illustrate a partially miscible interpenetrating network (IPN) morphology:
   3 (a): schematically represents phase separation of the polymer chain in a partially miscible IPN;
   3 (b): schematically represents a DMA curve of this morphology; and
   3 (c): schematically represents a TEM of this morphology.
Figure 4 is a TEM of the schematic representation of Figure 3 (c).

The epoxy-acrylate materials which are used in the present invention exhibit good damping behavior from about -50°C to about 260°C measured at 1 Hz, and as such are suitable as the viscoelastic component in both free-layer and constrained-layer damping constructions. Addition of other thermosets, thermoplastics and elastomers may also affect performance of the compositions.

While not wanting to be bound by theory, it appears the preferred viscoelastic damping materials may comprise a combination of polymers and exhibit a microheterogeneous morphology where phase boundaries are diffuse and the minor phase (present in a lesser amount) has a size distribution ranging from 0.01 micrometers (µm) to 5 µm. Damping materials that consist of two or more polymers and have macroscopically phase separated morphologies (on the order of micrometers) display damping performance at temperatures associated with the T_{g}'s of the individual polymers. Conversely, two or more polymers that are mutually soluble and form a single phase exhibit damping over a narrow temperature range, the same as does a single polymer. Thus, to achieve damping over a broad temperature range a multicomponent system with the proper degree of phase separation is required.

Traditionally, in macroscopically phase separated systems, component polymers have been chosen based on the temperature interval between their respective T_{g}'s so that their individual damping characteristics overlap. However, with a microheterogeneous morphology, damping behavior covering a broad temperature range is possible because there is a gradation of T_{g} character resulting from intimate mixing at diffuse interface boundaries.

The glass transition range of a two (or more) component (meth)acrylate blend can be broadened by causing phase separation between the components before final polymerization. This can be done by making oligomeric solutions (syrups) of each component, to a certain degree of polymerization, then by mixing of the solutions, some immiscibility will occur causing the desired phase separation.

IPNs and semi-IPNs are an attractive class of materials for use as damping materials because they have a potential of offering high performance and unique properties from the common and inexpensive polymers and monomers. The ability to prepare them solventlessly as described herein and in the previous literature render IPNs and semi-IPNs even more commercially interesting. There is also the added feature that IPNs provide coatings with vastly different performance using the same starting components. Such changes can be accomplished by varying the IPN morphology. "Morphology" describes the micro and macro molecular architecture, and how intimately the components are mixed on a continuum of size scales. The ability to control the resulting IPN morphology provides high performance polymers at low cost.

The degree of mixing of polymers in an IPN, or the degree and scale of their phase separation defines the properties of the resulting IPN. Typically, high polymers are highly immiscible due to the entropic considerations. In these IPNs thermodynamically incompatible polymers can be made compatible via kinetic routes described below. Less frequently, polymers of various chemical compositions can have similar solubility parameters and be "naturally" thermodynamically compatible due to chemical interactions or because of physical attraction brought on by the polar interactions, such as hydrogen-bonding, and van der Waal's forces. If these forces are large enough, the polymers are fully miscible.

### Morphology

The present invention demonstrates how the degree of phase separation in the thermodynamically incompatible interpenetrating networks can be controlled by two key rates. The rate of polymerization or crosslinking of each component is competing against the rate of diffusion of each polymer. Diffusion rate is driving the system to phase separate, while the polymer growth process counters by physically locking the two networks together. This process of polymerisation enables IPN morphology engineering by manipulating the rates of polymerization and diffusion of the IPN components.

This control is multi-fold: the rates can be varied by the choice of materials, processing and catalytic systems. The materials choice can vary the viscosity or the rigidity of the polymerization medium via the degree of cross-linking and the T_{g}s of the selected individual components. One means of controlling the kinetics of the reaction is by exerting control over the viscosity of the free radically polymerizable monomer. Such control can be attained through partially polymerizing the free radically polymerizable monomer. Media of different viscosities provide differing barriers to both diffusion and propagation.

Processing can greatly affect the rates by simply changing the order in which the IPN components are polymerized. The energy used to cure the components can be adjusted to affect the rates. Thermal cure can be substituted for the photoactivated polymerization to change the pace of the polymerization. The processing can be used to adjust the lag time between the initiation of each cure, thus allowing greater degree of diffusion and therefore, the phase separation.

The choice of the catalyst or the initiator, and its amount can have a profound effect on the polymerization and its speed. Additives can be used to delay or speed up the cure of the polymer.

Assuming that the monomeric mixture (or monomer A swelling network, polymer or oligomer B) is a true solution, the degree of incompatibility of the two polymers, forming the IPN, progressively grows with the increasing molecular weight due to, if nothing else, the entropic considerations. At the same time, the increasing molecular weight translates into increasingly interlocked and intertwined networks of the component polymers. These mechanical interlocks hinder the extensive phase separation of the incompatible networks.

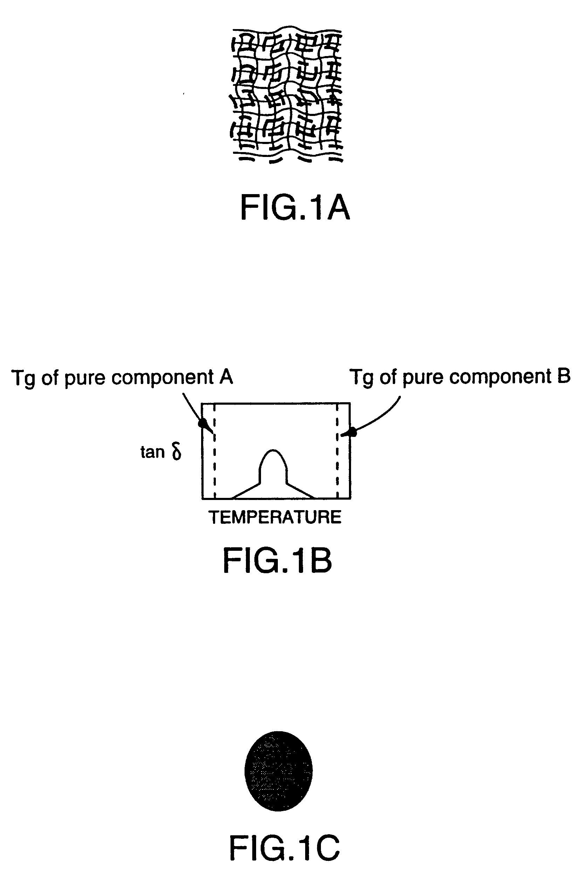

Thus, if the polymerization rate is much faster than the diffusion rate, then the growing polymers will not have a kinetic chance to phase separate and will end up "trapped together" at the gel point. Such IPNs will favor the "fully miscible" morphology. See Figure 1, below.

The intimate degree of mixing the polymer chains experience in such a morphology is depicted in Figure 1A. Figure 1B is a graphic representation of a DMA temperature scan, representative of a miscible IPN. Note that Figure 1B shows one phase with a rather narrow glass transition range.

If there is a polarity difference between the components of an IPN, then a "stain" can darken the TEM image of the more polar component. A graphic representation of a typical TEM image of a fully miscible IPN shows a featureless grey domain, as shown in Figure 1C.

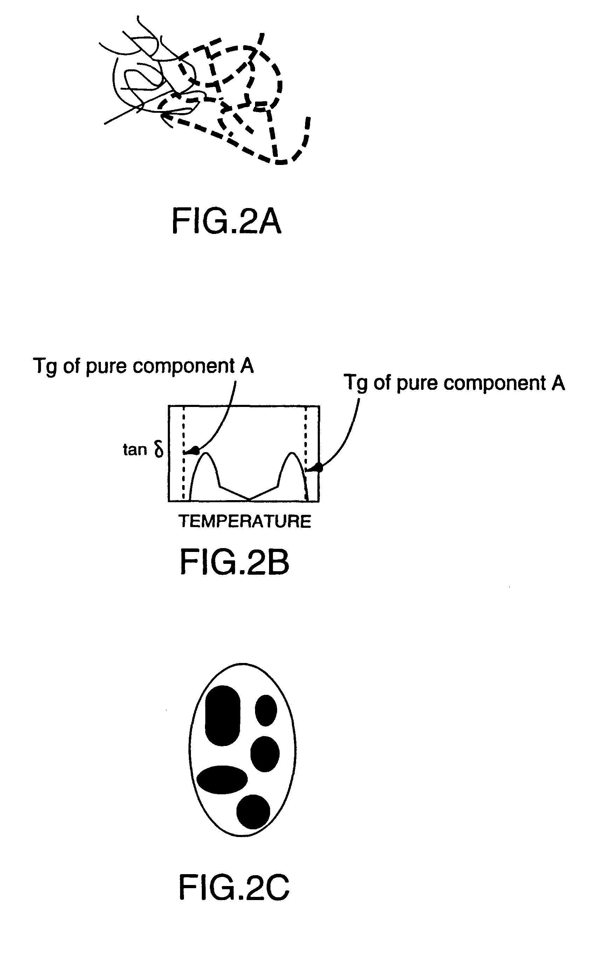

In the opposite case of very slow polymerization versus the faster diffusion, the incompatible components have plenty of time to phase separate and end up forming a "phase separated" IPN structure. Referring to Figure 2 extensive phase separation on the polymer chain level is graphically represented. Figure 2B demonstrates how DMA reveals two distinct peaks in tan δ, indicating separated phases with differring T_{g}s. A graphical representative of a typical TEM image as illustrated in Figure 2C is very different from the miscible structure of Figure 1C. It shows a contrasting matrix with emphasized domains of dark grey and white domains. The contrast is apparent, even if both phases are continuous over some area scanned.

While not wanting to be bound by theory, the "semi-phase separated" or "microheterogeneously phase separated" IPNs are the ideal morphology choice, if vibration damping over broad temperature ranges is desired. Wide temperature damping in "semi-phase separated" IPNs is a result of an aggregate molecular architecture consisting of a continual spectrum of compositions, ranging from pure low T_{g} component to the pure high T_{g} component.

The morphology comprised of a continuum of phase compositions is characteristic of an IPN formed under mixed kinetic control conditions. A system that either started out under the polymer growth control and later crossed over to the diffusion control, or vice versa, would encounter a regime of mixed controls in between. The degree of the allowed phase separation continually changes in the IPN formation during the change of the controls. Variable amounts of each component are allowed to diffuse in and out of the domains that are in the process of becoming discrete microheterogeneous particles. It is during this time that the phases are formed with a wide range of variable compositions.

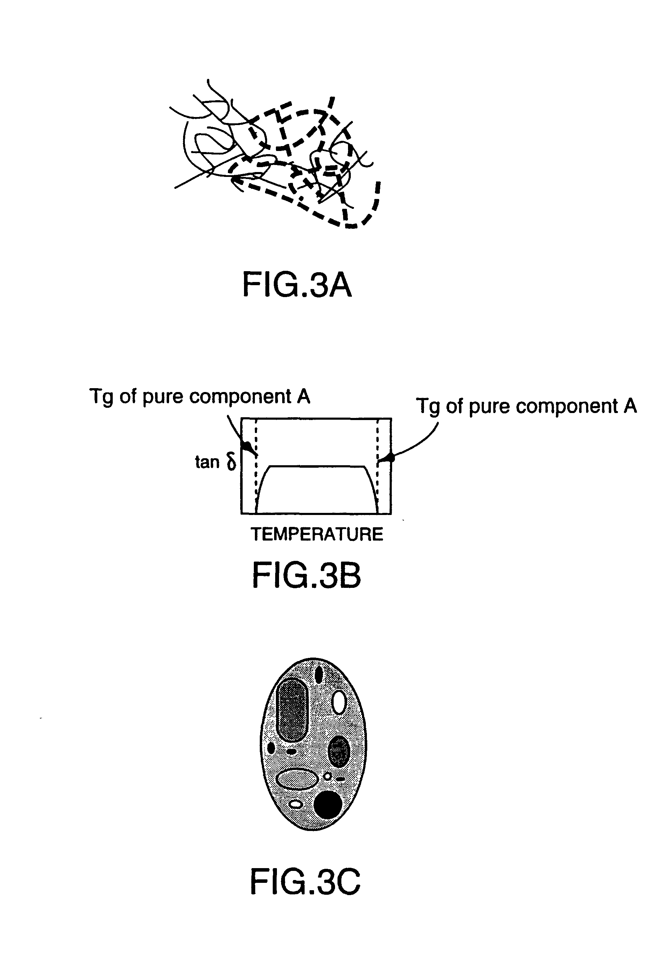

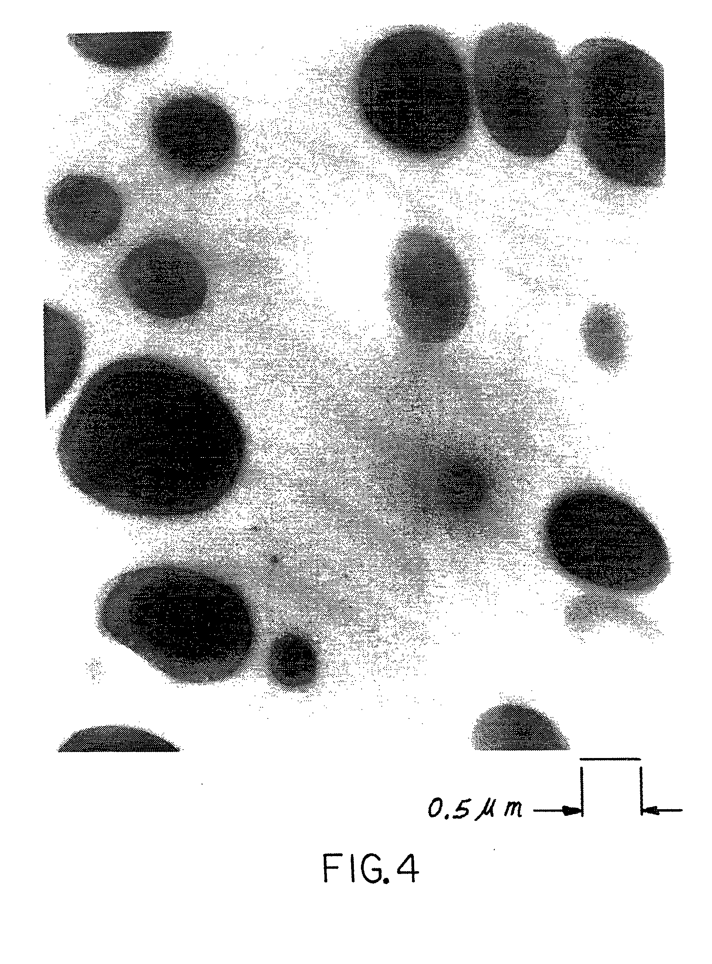

Now referring to Figure 3A, a graphic representation of the varying degrees of chain mixing is illustrated. This chain mixing results in much broader glass transitions, as shown in Figure 3B. A typical TEM, graphically illustrated in Figure 3C and Figure 4 (actual TEM), shows a grey matrix with both lighter grey and darker grey uniform "precipitates".

### Damping Performance

In viscoelastic materials, the maximum amount of energy is dissipated as heat at T_{g}. Effectiveness of a viscoelastic material in energy dissipation is evaluated by measuring its viscoelastic response to a periodic stress or strain. Results of dynamic mechanical tests are generally given in terms of elastic or storage modulus and viscous or loss modulus.

The angle which reflects the time lag between applied strain and stress is known as delta (δ), and is defined by the ratio called the dissipation factor or loss factor. Tan (δ) is a damping term and is a measure of the ratio of energy dissipated as heat to maximum energy stored in the material during one cycle of oscillation and is proportional to the ratio of the loss modulus to the storage modulus.

Dynamic mechanical criteria used to evaluate high temperature damping performance in a constrained layer geometry 3 point bending mode are as follows:
1. Thermal range where tan (δ) is greater than 0.06,
2. Thermal stability of this range after prolonged exposures to 260°C, and
3. Thermal range where tan (δ) is greater than 0.05 after 100 minutes at 260°C.

Damping materials comprising acrylates and acrylic acid are known to decompose at relatively low temperatures (< 160°C). However, acrylate damping materials can be useful below their decomposition temperature, particularly if the materials do not contain acrylic acid, which is known to be a corrosive agent. Advantageously, the preferred process in the present invention provides acrylate-containing damping materials with improved properties, that is, increases of the thermal decomposition temperature over acrylate damping materials, and significantly higher over acrylate/acrylic acid damping materials.

Surprisingly, it has been found that epoxy-acrylate resins, polymerized in the presence of one another to form an interpenetrating network, are useful in high temperature damping applications. These applications call for materials that can survive multiple prolonged exposures to high temperatures without significant loss of damping performance.

The criteria used to evaluate the coatings of the present invention were thermal stability of the damping performance and the thermal width or broadness of the effective damping range after multiple exposure to 260°C totalling 100 minutes.

### Damping Compositions

The present invention provides articles prepared using controllable multistep thermal polymerization of the multicomponent multiphase materials, whose various properties can be optimized by kinetically controlling the amount of phase separation. In art known processes, the degree of phase separation is largely fortuitous and depends solely on the oligomeric incompatibilites and degree of crosslinking. A microheterogeneous phase separation is an intermediate state between a completely miscible separation (illustrated in Figures 1 (a-c)) and a totally immiscible phase separation (illustrated in Figures 2(a-c)). The monomeric mixture starts out miscible and is thermodynamically driven to phase separate as the polymer molecular weight grows. As the epoxy monomers crosslink and the free radically polymerizable monomers crosslink, the growing polymers physically interweave and interlock, thereby tying the two phases together and kinetically preventing thermodynamically favored immiscibility.

Particularly useful free radically polymerizable monomers are those monomers that (a) have a tan (δ) ₘₐₓ of at least 0.06 when evaluated in a constrained layer geometry, and (b) generally do not interfere with the epoxy polymerization and are miscible with the epoxy monomers. Such free radically polymerizable monomers include (meth)acrylates and vinyl ester functionalized materials. Particularly useful acrylate and methacrylate materials can be monomers and/or oligomers such as (meth)acrylates, acrylic acid esters, and methacrylic acid esters. Such monomers include mono-, di-, or poly- acrylates and methacrylates such as methyl acrylate, methyl methacrylate, ethyl acrylate, isopropyl methacrylate, isooctyl acrylate, acrylic acid, n-hexyl acrylate, stearyl acrylate, allyl acrylate, isobornyl acrylate, isobornyl methacrylate, phenoxyethyl acrylate, phenoxyethyl methacrylate, tetrahydrofurfuryl acrylate, tetrahydrofurfuryl methacrylate, cyclohexyl acrylate, cyclohexyl methacrylate, benzyl acrylate, benzyl methacrylate, ethoxyethoxyethyl acrylate, ethoxyethoxyethyl methacrylate, glycerol diacrylate, glycerol triacrylate, tetraethyleneglycol diacrylate, 1,4-butenediol diacrylate, ethyleneglycol diacrylate, diethyleneglycol diacrylate, triethylenegtycol dimethacrylate, 1,6-hexanediol diacrylate, 1,3-propanediol diacrylate, 1,3-propanediol dimethacrylate, trimethylolpropane-triacrylate, 1,2,4-butanetriol trimethylacrylate, 1,4-cyclohexanediol diacrylate, pentaerythritol triacrylate, pentaerythritol tetraacrylate, pentaerythritol tetramethacrylate, sorbitol hexacrylate, bis[1-(2-acryloxy)]-p-ethoxyphenyl dimethylmethane, bis[1-(3-acryloxy-2-hydroxy)]-p-propoxyphenyl-dimethylmethane, tris-hydroxyethyl isocyanurate trimethacrylate; the bis-acrylates and bis-methacrylates of polyethylene glycols of molecular weight 200-500, copolymerizable mixtures of acrylated monomers such as those disclosed in U.S. Patent No. 4,652,274, and acrylated oligomers such as those disclosed in U.S. Patent No. 4,642,126.

Monofunctional acrylates may be used in combination with multifunctional acrylates, such as di- or poly- acrylates provided that the ratio of monoacrylate to multifunctional acrylates is in the range of 50:50 to 99.999:0.001, and preferably 98:2 to 99.999:0.001.

Epoxy functional resins useful in practicing this invention are those known to undergo cationic polymerization.

See the "Encyclopedia of Polymer Science and Engineering, 6, (1986), 322, for a description of suitable epoxy functional resins. In particular, epoxies that are useful include the cycloaliphatic epoxies such as cyclohexene oxide and the ERL™ series type of resins available from Union Carbide, such as vinylcyclohexene oxide, vinylcyclohexene dioxide, 3,4-epoxycyclohexylmethyl-3,4-epoxycyclohexahexanecarboxylate, bis-(3,4-epoxycyclohexyl) adipate and 2-(3,4-epoxycylclohexyl 5,5-spiro-3,4-epoxy) cyclohexene-*m*-dioxane; also included are the glycidyl ether type epoxy resins such as propylene oxide, epichlorohydrin, styrene oxide, glycidol, the Epon™ series type of epoxy resins available from Shell Chemical Co., including the diglycidyl either of bisphenol A and chain extended versions of this material such as Epon 828, Epon 1001, Epon 1004, Epon 1007, Epon 1009 and Epon 2002 or their equivalent from other manufacturers, dicyclopentadiene dioxide, epoxidized polybutadiene like the Poly bd™ resins from Elf Atochem, 1,4-butanediol diglycidyl ether, polyglycidyl ether of phenolformaldehyde resole or novolac resin and resorcinol diglycidyl ether.

The preferred epoxy resins include the ERL™ type of resins, in particular 3,4-epoxycyclohexylmethyl-3,4-epoxycyclohexanecarboxylate, bis-(3,4-epoxycyclohexyl) adipate and 2-(3,4-epoxycylclohexyl-5,5-spiro-3,4-epoxy) cyclohexene-*m*-dioxane and the bisphenol A Epon™ type resins including 2,2-bis-[*p*-(2,3-epoxypropoxy)phenylpropane and chain extended versions of this material. It is also within the scope of this invention to use a blend of more than one epoxy functional resin.

When present, useful hydroxyl-containing materials include mono- or poly-alcohols and can be used to control rate of epoxy polymerization and polymer diffusion by altering the epoxy cross-link density. Such monoalcohols can include methanol, ethanol, 1-propanol, 2-propanol, 2-methyl-2-propanol, 1-butanol, 2-butanol, 1-pentanol, neopentyl alcohol, 3-pentanol, 1-hexanol, 1-heptanol, 1-octanol, 2-phenoxythanol, cyclopentanol, cyclohexanol, cyclohexylmethanol, 3-cyclohexyl-1-propanol, 2-norbornanemethanol, and tetrahydrofurfuryl alcohol.

The polyols useful in the present invention can be aliphatic, cycloaliphatic, or alkanol-substituted arene polyols, or mixtures thereof having 2 to 18 carbon atoms and two to five, preferably two to four hydroxy groups. Nonlimiting examples of useful polyols include 1,2-ethanediol, 1,2-propanediol, 1,3-propanediol, 1,4-butenediol, 1,3-butanediol, 2-methyl-1,3-propanediol, 2,2-dimethyl-1,3-propanediol, and 2-ethyl-1,6-hexanediol, 1,5-pentane diol, 1,6-hexanediol, 1,8-octanediol, neopentyl glycol, glycerol, trimethylolpropane, 1,2,6-hexanetriol, trimethylolethane, pentaerythritol, quinitol, mannitol, sorbitol, diethylene glycol, triethylene glycol, tetraethylene glycol, glycerine, 2-ethyl-2-(hydroxymethyl)-1,3-propanediol, 2-ethyl-2-methyl-1,3-propanediol, pentaerythritol, 2-ethyl-1,3-pentanediol, and 2,2-oxydiethanol, 1,4-cyclohexane dimethanol, 1,4-benzene dimethanol, 2-butane-1,4-diol, and polyalkoxylated bis-phenol A derivatives. Particularly useful diols are cyclohexane dimethanol and hexanediol. Other examples of useful diols are disclosed in U.S. Patent No. 4,503,211.

Higher molecular weight polyols include the polyethylene and polypropylene oxide polymers in the molecular weight range of 200 to 20,000 such as the Carbowax™ polyethyleneoxide materials supplied by Union Carbide, caprolactone polyols in the molecular weight range of 200 to 5,000, such as the Tone™ polyol materials supplied by Union Carbide, polytetramethylene ether glycol in the molecular weight range of 200 to 4,000, such as the Terathane™ materials supplied by Dupont, hydroxyl terminated polybutadiene resins such as the Poly bd™ resins supplied by Elf Atochem, or equivalent materials supplied by other manufacturers.

The hydroxyl-containing material can be present as a mixture of materials and can contain mono- and poly- hydroxyl containing materials. The hydroxyl-containing material, when present is present in an amount sufficient to provide an epoxy to hydroxy ratio in the composition between about 1:0.1 and 1:1, more preferably between about 1:0.2 and 1:0.8, and most preferably between about 1:0.3 and 1:0.6.

Free-radical initiators can be selected from those compounds that generate free-radicals upon exposure to heat or radiation, for example, those compounds described in "Mechanisms of the Photodecomposition of Initiators" George F. Vesley, Journal of Radiation Curing, January, 1986, or in Chemistry & Technology of UV & EB Formulations for Coatings, Inks & Paints, Volume III, Photoinitiators for Free Radical and Cationic Polymerization, SITA Technology, London, 1991. They are selected from substituted and unsubstituted acetophenones and ketals, benzophenones, aryl glyoxalates and acylphosphine oxides.

Preferred free radical initiators are acetophenones and ketals corresponding to the formula 1: 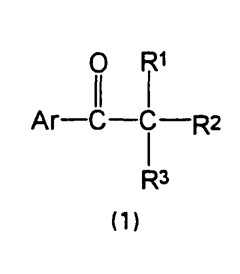 wherein R¹ and R² is -OR⁴, R⁴ is an alkyl having 1 to 4 carbon atoms and R³ is a phenyl; or R¹ and R² taken together form an alkylene having 2 to 8 carbon atoms, preferably cyclohexylene, and R³ is -OH or phenyl. The photoinitiator can be a mixture of one or more compounds.

Such compounds have been described, for example, in U.S. Patent Nos. 3,715,293, 3,728,377, 4,284,485 and 4,318,791.

Examples of the preferred compounds include:
2,2-dimethoxyacetophenone, 2,2-dimethoxy-2-phenylacetophenone,
2,2-diethoxyacetophenone, 2,2-dibutoxyacetophenone,
2,2-dimethyl-2-hydroxyacetophenone,
2,2-dimethyl-2-morpholino-(p-thiomethyl) acetophenone and
1-hydroxycyclohexyl phenyl ketone.

Peroxides and azo compounds are particularly useful as thermal free radical initiators. Examples of useful peroxide and azo initiators are described in "The Encyclopedia of Polymer Science and Technology, Vol. 11, pp 1-21 (John Wiley & Sons, Inc. 1988) and include, but are not limited to: azo-t-butane, 2-phenylazo-2,4-dimethyl-4-methoxyvaleronitrile, 2,2'-azobis(2,4,4-trimethyl-pentane), 2-(carbamoylazo)isobutyronitrile, 1,1'-azobis(1-cyclohexanecarbonitrile), 2,2'-azobis(2-methylbutyronitrile), dimethyl 2,2'-azobisisobutyrate, 2,2'-azobisisobutyronitrile, 2,2'-azobis(2,4-dimethyl-valeronitrile), 2,2'-azobis(4-methoxy-2,4-dimethylvaleronitrile), 2,2'-azobis(2,4-dimethylpentane nitrile), 2,2'-azobis(2-methylpropanenitrile), 2,2'-azobis(2-methylbutanenitrile), 1,1'-azobis(cyclohexanecarbonitrile).

Preferred di-alkyl peroxides and azo compounds include azo-t-butane, 2,2'-azobis(2,4,4-trimethyl-pentane) and di-t-butyl peroxide 1,1-di-(t-butylperoxy)-3,3,5-trimethylcyclohexane.

For partially polymerizing free radically polymerizable monomers without crosslinking, and to prepare the syrups described below, the following initiators, either alone or in combination with each other, are found useful and include: the benzoin ethers (such as benzoin methyl ether or benzoin isopropyl ether), substituted benzoin ethers (such as anisoin methyl ether), substituted acetophenones (such as 2,2-diethoxyacetophenone and 2,2-dimethoxy-2-phenylacetophenone), substituted alpha-ketols (such as 2-methyl-2-hydroxypropiophenone), aromatic sulfonyl chlorides (such as 2-naphthalene-sulfonyl chloride) and photoactive oximes [such as 1-phenyl-1,1-propanedione-2(o-ethoxycarbonyl)oxime].

In preparing a free radically polymerizable syrup, the initiators may be used in amounts, which as dissolved, provide about 0.001 to 0.5 % by weight of the free radically polymerizable monomer, preferably at least 0.01 % by weight. When used in the final curable composition, the initiators may be used in amounts which, as dissolved, provide about 0.01 to 5.0 % by weight of the free radically polymerizable monomer, preferably 0.1 to 2 % by weight.

Suitable organometallic salts are known in the art and can be prepared as described in, for example, U.S. Patent Nos. 5,089,536, 5,059,701, and 5,191,101. Salts of organometallic complex cations can be used as mixtures and isomeric mixtures. Disubstituted ferrocene derivatives can be prepared by the general procedure described in J. Amer. Chem. Soc., 1978, 100, 7264. Ferrocene derivatives can be oxidized to prepare the corresponding ferrocenium salts by the procedure described in Inorg. Chem., 1971, 10, 1559.

The salts of organometallic complex cations useful in the vibration damping compositions of the present invention have formula 2:

[(L¹)ₘ(L²)ₚM]^{+q}Xₙ (2)

wherein:
- M: is selected from the group containing Cr, Mo, W, Mn, Re, Fe, Ru, and Os;
- L¹: represents ligands contributing π-electrons that can be selected from substituted and unsubstituted aromatic compounds and substituted and unsubstituted heterocyclic aromatic compounds, and capable of contributing six π-electrons to the valence shell of M;
- L²: represents ligands contributing π-electrons that can be selected from substituted and unsubstituted cyclopentadienyl and indenyl anions, and capable of contributing six π-electrons to the valence shell of M;
- m and p: are integers having a value of 0 or 2, such that, when m is equal to 2, each L¹ may be the same or different ligands and p is equal to O; and when p is equal to 2, each L² may be the same or different ligands and m is equal to 0, provided the sum of (m + p) is equal to 2;
- q: is an integer having a value of 1 or 2, the residual charge of the complex cation;
- X: is an anion selected from organic sulfonate anions selected from the group consisting of CH₃SO₃⁻, CF₃SO₃⁻, C₆H₅SO₃⁻, p-toluenesulfonate, p-chlorobenzenesulfonate and related isomers, and halogen-containing complex anions of a metal or metalloid selected from the group consisting of BF₄⁻, AsF₆⁻, PF₆⁻, SbF₅OH⁻, SbF₆⁻, and CF₃SO₃⁻; and
- n: is an integer having a value of 1 or 2, the number of complex anions required to neutralize the charge q on the complex cation.

The preferred salts of organometallic complex cations useful in the compositions of the invention are where L¹ is selected from the class of substituted and unsubstituted aromatic compounds based on benzene and L² is selected from the class of substituted and unsubstituted compounds containing a cyclopentadienyl anion, M is Fe and X is selected from the group consisting of tetrafluoroborate, hexafluorophosphate, hexafluoroarsenate, hexafluoroantimonate, hydroxypentafluoroantimonate or trifluoromethanesulfonate.

Examples of the preferred salts of organometallic complex cations useful in preparing the compositions of the invention include the following:
bis-(η⁶-benzene)iron(2+) hexafluoroantimonate
bis-(η⁶-cumene)iron(2+) hexafluoroantimonate
bis-(η⁶-durene)iron(2+) hexafluoroantimonate
bis-(η⁶-p-xylene)iron(1+) hexafluoroantimonate
bis-(η⁶-mesitylene)iron(2+) hydroxypentafluoroantimonate
bis-(η⁶-mesitylene)iron(2+) trifluoromethanesulfonate
bis-(η⁶-mesitylene)iron(2+) hexafluoroantimonate
bis-(η⁶-hexamethylbenzene)iron(2+) hexafluoroantimonate
bis-(η⁶-pentamethylbenzene)iron(2+) hexafluoroantimonate
bis-(η⁵-methylcyclopentadienyl)iron(1+) hexafluoroantimonate
bis-(η⁵-trimethylsilylcyclopentadienyl)iron(1+) hexafluoroantimonate
bis-(η⁵-triphenyltincyclopentadienyl)iron(1+) hexafluoroantimonate
bis-(η⁵-indienyl)iron(1+) hexafluoroantimonate
(η⁵-cyclopentadienyl)(η⁵-methylcyclopentadienyl)iron(1+) hexafluoroantimonate
bis-(η⁵-cyclopentadienyl)iron(l+) trifluoromethanesulfonate
bis-(η⁵-trimethylsilylcyclopentadienyl)iron(l+) trifluoromethanesulfonate
bis-(η⁵-triphenyltincyclopentadienyl)iron(l+) trifluoromethanesulfonate
bis-(η⁵-cyclopentadienyl)iron(l+) hexafluoroantimonate
bis-(η⁵-cyclopentadienyl)iron(l+) hydroxypentafluoroantimonate

Useful stabilizing additives are compounds that have segments or central nucleus as described in formulas 3-4. The first class of compounds is described by formula 3: 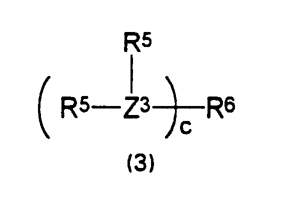 wherein
- Z³: is nitrogen, phosphorus, arsenic or antimony;
- R⁵: is a radical moiety that can be the same or different and is selected from substituted and unsubstituted C₁ to C₁₀ alkyl groups, substituted and unsubstituted groups of one to four aromatic rings, wherein two to four rings can be fused or unfused rings;
- R⁶: is R⁵ or a divalent group (as when c = 2) selected from alkylene, having 3 to 10 carbon atoms and phenylene groups; or two R⁵ groups can be taken together to form a cyclic ring having 5 to 7 ring atoms;
- c: is 1 or 2.

Examples of suitable additives include according to the above formula, but are not limited to trialkyl, tricycloalkyl, tri(alkylcycloalkyl), triaryl, trialkaryl amines, such tertiary amines are listed in U.S. Patent No. 4,503,211, especially diethyl-o-toluidine, phosphines, phosphites, arsines, stibines such as triphenylphosphine, triphenylstibene, triphenylarsine, tricyclohexylphosphine, tributylphosphine, tripropylyphosphine, triethylphosphine, trimethylphosphine, triisopropylphosphine, triisopropylphosphite, tributylphosphite, triphenylphosphite, triethylamine, tripropylamine, tributylamine, and chelating phosphines such as diphenylphosphinomethane, diphenylphosphinoethane, diphenylphosphinopropane. The preferred stabilizers include triarylphosphines, triarylstibines and substituted and unsubstittued dialkylaryl tertiary amines.

Another class of compounds useful as stabilizing additives are those having formula 4: 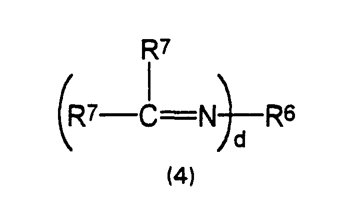 wherein
R⁶ is as defined above;
R⁷ can be hydrogen or R⁵ as defined above; and
d is 1 or 2.

These stabilizers are compounds known as Schiff bases and are generally made by the condensation of a ketone or aldehyde with a primary amine. They can be prepared by the general methods described in U.S. Patent No. 4,909,954. In preferred compounds, d is 1, one R⁷ is a substituted or unsubstituted phenyl group and the other R⁷ is hydrogen, and R⁶ is a substituted or unsubstituted alkyl, phenyl, or alkoxy, or when d is 2, one R⁷ is a phenyl and the other R⁷ is hydrogen and R⁶ is a diradical bridging an alkylene or phenylene group.

Examples of substituting groups for R⁴ to R⁷, all of which preferably have less than 30 carbon atoms and up to 10 hetero atoms selected from nitrogen, sulfur, non-peroxidic oxygen, phosphorus, arsenic, selenium, antimony, tellurium, silicon, germanium, tin, and boron, include hydrocarbyl groups such as methyl, ethyl, butyl, dodecyl, tetracosanyl, phenyl, benzyl, allyl, benzylidene, ethenyl, and ethynyl; hydrocarbyloxy groups such as methoxy, butoxy, and phenoxy; hydrocarbylmercapto groups such as methylmercapto (thiomethoxy), phenylmercapto (thiophenoxy); hydrocarbyloxycarbonyl such as methoxycarbonyl and phenoxycarbonyl; hydrocarbylcarbonyl such as formyl, acetyl, and benzoyl; hydrocarbylcarbonyloxy such as acetoxy, and cyclohexanecarbonyloxy; hydrocarbylcarbonamido, for example, acetamido, benzamido; azo, boryl; halo, for example, chloro, iodo, bromo, and fluoro; hydroxy; cyano; nitro; nitroso, oxo; dimethylamino; diphenylphosphino, diphenylarsino; diphenylstibine; trimethylgermane; tributyltin; methylseleno; ethyltelluro; and trimethylsiloxy; condensed rings such as phenyl, cyclopentyl; naphthyl, and indenyl.

### Method of Preparation

A process is provided, wherein polymerization of epoxy monomers and free radically polymerizable monomers in the presence of each other produces interpenetrating polymeric networks. This environmentally friendly process is solventless and produces the cured mixture of the epoxy resins and free radically polymerizable resins by application of heat in one or multiple steps with and without prior irradiation.

The process comprises:
(a) admixing at least one partially polymerized free radically polymerizable monomer, at least one epoxy resin, at least one free radical initiator, and a thermally initiated cationic catalyst system, which comprises at least one organometallic complex salt, and at least one stabilizer,
(b) coating the admixture on at least a portion of one surface of a substrate, and
(c) applying heat to the admixture with a heating means.

The resin composition comprises a syrup, that is a mixture of partially polymerized free radical monomers (0.001% to 15.0% conversion), substantially unpolymerized epoxy resins, and optional adjuvants.

### Method A

A first step in the preparation of the syrup is to mix the polymerizable monomers (cationically and free radically polymerizable monomers) with a catalytically effective amount of a free radical initiator. Preferably, the free radical initiator is not a crosslinking agent and is generally present in an amount within the range of 0.01 to 5.0% by weight of the polymerizable composition, preferably in the range of 0.02 to 1.0% by weight of the polymerizable composition.

A second step is to apply energy to the polymerizable composition to allow it to polymerize such that the viscosity is increased to within a range of 300 to 20,000 centipoise (cps) (0.3 to 20.0 Pascal seconds (Pa·sec)) at ambient temperature. Preferably, the viscosity after this step is in the range of 500 to 4000 cps (0.5 to 4.0 Pa·sec). The increased viscosity provides a syrup that is suitable as a coating composition for production of the articles of the invention. The polymerizable composition may be polymerized using any well-known polymerization technique and quenched with air to attain the desired viscosity. By "quenched" is meant to inhibit any polymerization or further polymerization. Preferably, the free radical initiator is a photoinitiator, and the partial polymerization may be stopped at any point by eliminating the irradiation source.

A third step is to mix at least one organometallic complex salt and the stabilizing additives, hydroxyl containing material, bireactive free radically polymerizable monomer, bifunctional monomer, adjuvants and additional amount of the above-identified free radical initiator into the syrup.

A fourth step is to degas the curable compositions under vacuum to remove bubbles, dissolved air, oxygen, and the like. Although it is preferable to do this step just prior to coating, it may be carried out at any time from a few hours to several weeks prior to coating. To insure stability of the degassed curable compositions, it is preferable to keep them from unwanted exposure to light.

### Method B

Alternatively, if the free radically polymerizable composition is derived from a mixture of one or more alkyl (meth)acrylates, a syrup of the free radically polymerizable monomers can be prepared without addition of cationically polymerizable monomers.

The first step in the alternative method is to mix the free radically polymerizable monomers with a catalytically effective amount of a free radical initiator. Preferably, this free radical initiator is not a crosslinking agent and generally is present in amounts in the range of 0.01 to 5.0% by weight of the free radically polymerizable components, and preferably in the range of 0.02 to 1.0% by weight.

The second step is to apply energy to the polymerizable composition and allow it to polymerize such that the viscosity is increased to within a range of 300 to 20,000 cps at ambient temperature. Preferably, the viscosity after this step is in the range of 500 to 4000 cps. The increased viscosity provides a syrup that is more suitable as a coating composition for production of articles of this invention.

The polymerizable composition can be polymerized by any well-known thermal polymerization techniques and quenched with air to attain the desired viscosity. It is preferable to use a photoinitiator as the free radical initiator in this process, such that the partial polymerization may be stopped at any point by eliminating the irradiation source and then quenching polymerization with oxygen. It is preferable to use a low intensity irradiation source in this photochemical process and that the mixture be cooled during irradiation. Low intensity irradiation and cooling minimize gel formation during the syrup making process. By "cooling" is meant to keep the composition at or below room temperature. After quenching the polymerization reaction, optional bireactive monomers, bifunctional monomers, adjuvants and additional free radical initiators may be added.

The cationic catalyst sytem is then added to a cationically polymerizable material. If the cationic initiator is not readily soluble, solution can be aided by application of heat. When heating the cationic initiator in the presence of the cationically polymerizable material, it is advantageous to reduce exposure of the mixture to light, to minimize the risk of unwanted polymerization. The cationic initiator can also be dissolved in a suitable solvent first and then added to the cationically polymerizable material.

It is also permissible to add the optional bireactive monomers, bifunctional monomers, adjuvants and additional free radical initiators to this composition.

The syrup and cationically polymerizable mixture are then mixed together. While it is permissible to mix the components in any order, it is preferable to add the acrylate syrup to the cationically polymerizable mixture. If optional bireactive monomers, bifunctional monomers, adjuvants and additional free radical initiators have not been added previously, they may be added at this time. The composition is thoroughly mixed to evenly distribute the components.

The curable compositions are degassed under vacuum to remove bubbles and dissolved air (oxygen). Although, it is preferable to do this step just prior to coating, degassing can be carried out at any time from a few hours to several weeks prior to coating. To insure stability of the degassed curable compositions, it is preferable to keep the curable composition from unwanted exposure to light.

The preferred method is to combine two or more free radically polymerizable syrups, wherein each syrup is prepared either using Method A or Method B.

### Vibration Damping Articles and Method of Making

A method for preparing a vibration and sound absorbing material comprises the steps:
(1) providing a first substrate;
(2) preparing a curable mixture as described above comprised of a (a) at least one free radically polymerizable monomer, (b) at least one epoxy functional resin, (c) at least one free radical polymerization initiator, and (d) thermally-initiated cationic catalyst system comprising
   (i) at least one salt of an organometallic cation having the formula described above; and
   (ii) the above stabilizing additive;
(3) coating the curable mixture onto the first substrate;
(4) exposing the curable mixture to an energy source to activate the free radical initiator to provide a partially cured coating;
(5) laminating the partially cured coating between the first substrate, and a second substrate; and
(6) exposing the laminate to a temperature sufficient to cure component (b) to provide a fully cured coating laminated between the first and second substrates.

For most applications, the viscoelastic layer is a coating having a thickness of at least 0.01 mm up to about 100 mm, preferably 0.025 to 100 mm, and most preferably 0.05 to 100 mm. The coating can be applied to a substrate by any of the techniques known in the art such as by spray, dip, knife, or curtain coating.

A stiff layer or a substrate is an essential part of constrained-layer vibration-damping constructions. A suitable material for a substrate has a stiffness of 0.40 (relative to stainless steel) as defined in Handbook of Tables for Applied Engineering Science 130 (ed. R. Bolz, 1974). The desired stiffness of the substrate is varied by adjusting the thickness of the layer, for example from about 25 micrometers to 5 centimeters, depending on the modulus of the substrate. Examples of suitable materials include metals such as iron, steel, nickel, aluminum, chromium, cobalt and copper, and alloys thereof; stiff thermoplastic materials, such as polystyrene, polyvinyl chloride, polyurethane, polyphenyl sulfide, and polycarbonate; stiff thermoset materials; fiber-reinforced thermoplastics; fiber-reinforced thermosets, such as epoxies, phenolics; ceramic fiber; and metal fiber-reinforced polyester, glasses, and ceramics.

Since the viscoelastic layer generally has some adhesive properties, the epoxy-acrylate thermoset resin could be readily adhered to the vibratory article without use of an adhesive. However, it is sometimes desirable to use a thin layer (for example, 20-50 mm) of a high-modulus adhesive, such as an acrylic adhesive or an epoxy adhesive, to bond the viscoelastic layer to the vibratory article. Advantageously, coating a vibratory article directly allows damping of 3-dimensional (and unusually shaped) articles.

The layer thickness of a free-layer damping construction is generally greater than that for a constrained layer construction, since damping performance of the free-layer construction is a function of the layer thickness, see Kerwin and Ungar, supra.

The curable compositions may be coated between rigid substrate members and exposed to heat to complete the polymerization. Furthermore, if desired, both the cationic and the free radically polymerizable components can be initiated either simulteneously or sequentially in two discrete thermal steps. In the first thermal cure step either the epoxy component or the acrylate component can be cured, followed at a later time by the thermal cure of the remaining uncured component. These methods are termed "all-thermal initiation processes".

Alternatively, the compositions may be cured using sequential exposure to a irradiation (only one frequency) and heated to complete the polymerization (photo-thermal initiation process). In this process the curable composition containing a cationic organometallic catalyst and a free radical photoinitiator is irradiated with UV light. The resultant B-stage coating may be heat cured to form a free-standing, vibration damping layer. Alternatively, the B-stage coating can be bonded to at least one constraining layer and heat cured to form a tough vibration damping coating. In yet another configuration, the B-stage coating can be used to make a vibration damping composite construction wherein the coating composition makes a heat curable bond between two constraining layers.

Energy polymerizable compositions of this invention are radiation sensitive in addition to being thermally sensitive. The compositions can be cured in a two stage curing process using radiation followed by heat, heat followed by radiation, or heat followed by heat. Heat can also be applied or removed before or during the irradiation process to promote or retard the curing of the composition, respectively. The preferred process for curing the curable composition is heat/radiation/heat or heat/heat.

Articles subject to vibration (vibratory articles) for damping or isolation contemplated in the practice of this invention include, but are not limited to, components of computers, motors, automotives, trucks, ships, airplanes, public works, buildings and building construction, electric or electronic materials and sporting goods.

In one variation of the damping construction of the present invention, the acrylate-containing thermoset resin is bonded to a vibratory solid article that is to be damped. This application is referred to as a "free" viscoelastic layer, sometimes referred to as "extensional" damping. See Kerwin and Ungar, "Sound and Vibration Damping with Polymers," No. 424 ACS Symposium Series, Chapt. 17, (1989).

The epoxy-acrylate thermoset resin can also be used in a three layer laminate comprising in succession a base layer (vibratory solid object) to be damped, the viscoelastic layer and a constraining layer. This application is referred to as a "constrained" viscoelastic layer, sometimes referred to as "shear" damping (Kerwin and Ungar, supra.). Furthermore, the resins are useful in variations of the constrained viscoelastic layer configuration, such as a segmented constraining layer, multiple constrained layer treatments, and multiple, overlapping segmented layers.

Vibration damping laminates containing epoxy-acrylate thermoset resins may be prepared according processes well known in art, for example, such as those described in U.S. Patent No. 4,447,493.

The constrained-layer construction can be mechanically or adhesively affixed to the vibratory article that is to be damped. Since the viscoelastic layer has adhesive properties, the cured resin can generally be adhered to a stiff layer or substrate without additional use of adhesives. It is sometimes desirable, however, to use a thin layer (for example, 20-50 mm) of high-modulus adhesive, such as an acrylic adhesive or an epoxy adhesive, to bond the viscoelastic layer to a solid article which can be, for example, an oil pan, a valve cover, or a transmission housing.

Objects and advantages of this invention are further illustrated by the following examples, but the particular materials and amounts thereof recited in these examples, as well as other conditions and details, should not be construed to unduly limit this invention. All materials are commercially available or known to those skilled in the art unless otherwise stated or apparent.

### Glossary

- IOA: isooctyl acrylate (available from Sartomer Co.)
- IBA: isobornyl acrylate (available from Sartomer Co. under the trade designation "SR-506")
- HDDA: 1,6-hexanediol diacrylate (available from Sartomer Co. under the trade designation "SR-238")
- ERL4221: 3,4-epoxycyclohexylmethyl-3,4-epoxycyclohexanecarboxylate (available from Union Carbide)
- KB-1: 2,2-dimethoxy-1-phenylacetophenone (available from Sartomer Co. or from Ciba Geigy under the trade designation "Irgacure 651")
- VR-110: 2,2'-azobis(2,4,4-trimethyl-pentane) (available from Wako Chemical Co.)
- VR-160: azo-t-butane (available from Wako Chemical Co.)
- V-19: 2-phenylazo-2,4-dimethyl-4-methoxyvaleronitrile (available from Wako Chemical Co.)
- V-30: 2-(carbamoylazo)isobutyronitrile (available from Wako Chemical Co.)
- Trigonox B: di-t-butyl peroxide (available from Akzo Chemical Co.)
- Trigonox-29: 1,1-di-(t-butylperoxy)-3,3,5-trimethylcyclohexane (available from Akzo Chemical Co.)
- Epon 1001F: diglycidyl ether of bisphenol A (epoxy equivalent weight of 525-550 g·eq⁻¹) (available from Shell Chemical Co.)
- Cp₂FeSbF₆: bis(η⁵-cyclopentadienyliron)(1+) hexafluoroantimonate
- Mes₂Fe(SbF₆)₂: bis(η⁶-mesitylene)iron(2+) hexafluoroantimonate
- Cp(Xyl)FeSbF₆: (η⁵-cyclopentadienyl)(η⁶-xylenes)iron(1+) hexafluoroantimonate
- DEOT: N,N-diethyl o-toluidine

### Examples

All materials are commercially available except where stated or otherwise made apparent. In the following examples, all amounts are in parts by weight unless otherwise specified or apparent. Specific temperatures where maximum damping was observed were determined by the glass transition temperature, T_{g}, of the particular composition.

### Test Methods

### Dynamic Mechanical Analysis (DMA)

Measurements reported were made using a Seiko DMS 110 Rheometer operating in a linear dynamic temperature ramp mode using a 20 mm head for bending of a constrained layer specimen geometry. Results were analyzed in terms of E', E", and tan (δ) as a function of temperature. DMA results of illustrative examples are summarized below and illustrate the high temperature damping characteristics of the preferred damping materials.

### Differential Scanning Calorimetry (DSC)

DSC was used to measure the exothermic heat of reaction associated with the cure of the epoxy material. This energy is measured in Joule/gram (J/g). The exotherm profile, i.e. peak temperature, onset temperature, etc., of the exotherm provided information on conditions that are needed to cure the material. The onset temperature (Tₒₙₛₑₜ) is the point of intersection between the tangents drawn to the curve along the baseline, and after the onset of the exotherm at the point of maximum change in slope. The integrated energy under an exothermic peak is related to the extent of cure. For a stable composition, more of that exotherm energy should remain with time indicating that the composition is not curing prematurely. For an unstable composition, the exotherm energy will decrease more rapidly with time indicating that the composition has undergone some degree of cure prematurely.

### ¹H Nuclear Magnetic Resonance

The samples were analyzed using a Varian XL400 FT NMR. 1H NMR was used to demonstrate the independence of the acrylate cure from the epoxy cure in a sequential thermal polymerization. NMR allowed simultaneous monitoring of the epoxy conversion and the acrylate conversion. The protons of the oxirane ring, attached to the carbons immediately adjacent to the epoxy oxygens were detected at about 3.15 - 3.25 ppm, while the olefinic protons of the IBA were detected in the 5.7 to 6.4 ppm region. NMR showed that after partially polymerization of the free radically polymerizable monomer, only the epoxy polymerized. The epoxy proton peaks decreased as the ring opened during the polymerization, while the olefins in the acrylate remained constant.

### Weight Loss

Various samples were prepared, coated and weighed. The samples were partially polymerized at 100°C for 90 seconds to cure the epoxy. The samples were then weighed again. The samples were then reheated at 210°C for 10 minutes to polymerize the acrylate component. The samples were then cooled and weighed for a final time to measure the total weight loss.

### Acrylate Syrup Preparation

Three syrups each having a viscosity of approximately 2000 cps were prepared independently from IOA, IBA, and a 1:1 mixture of IOA and IBA. The syrups were prepared by adding 0.05% by weight of KB-1 to each of the acrylate(s) compositions and photolyzing with 350 nm light under a N2 purge until the desired viscosity was attained of approximately 2000 cps. Samples for DMA were prepared from each of the three syrups (P1-P3) and of a fourth syrup (CEP4) comprising a 1:1 mixture of the independently polymerized IOA and IBA syrups previously prepared, each of which had been prepared by adding 0.5% by weight KB-1 to the syrups.

Each of syrups were poured into 50 x 6 x 1 mm molds, covering the molds with a conventional silicone/polyester substrate with a release liner and a quartz plate (approximately 5 mm thick) and exposing the molds to 350 nm light for 10 minutes to complete the polymerization. The samples were tested on a Seiko Tensile DMS 200 DMA using a 2°C/min heating rate. The T_{g} of the four syrups are summarized in the Table below. The results indicate the use of mixtures of syrups cause increased phase separation that is not obtained from the partially polymerization of the monomers alone.

| Examples | Composition | T_{g} (°C) |
|---|---|---|
| P1 | partially polymerized IOA | -46 |
| P2 | partially polymerized IBA | 100 |
| P3 | partially copolymerized IOA and IBA | 37 |
| CEP4 | combination of P1 and P2 | 4 and 91 |

### Comparative Examples 1-5

These examples describe the preparation of epoxy-acrylate compositions wherein the epoxy-acrylate composition was photopolymerized. The samples were evaluated for damping characteristics using a Seiko DMS 110 rheometer and the results are summarized in Table 4. Dynamic mechanical analysis (DMA) curves, summarized below, were obtained by laminating an epoxy/polyacrylate coating between two pieces of steel (10 mm x 50 mm x 0.2 mm) and thermally cycling the constrained layer samples in the Seiko DMA-110 in the bending mode according to the following schedule: The samples were cured for 2 mins at 100°C followed by 10°C/min from room temperature to 260°C. The samples were then "parked" for 10 min at 260°C.
- Run 1: -50°C to 260°C at 5°C/min, and then parked for 30min at 260°C, and
- Run 2: -50°C to 260°C at 5°C/min, and then parked for 60min at 260°C, and
- Run 3: -50°C to 260°C at 5°C/min

### Comparative Example C1

This example describes preparation of an epoxy-acrylate thermoset resin wherein the epoxy-acrylate thermoset composition was photopolymerized.

A partially polymerized syrup was prepared from a mixture of acrylate monomers and a low concentration of a free radical photoinitiator. A solution of epoxy resin and cationic organometallic photoinitiator was prepared by heating the resin in the dark to about 50 to 60°C, adding the organometallic salt and stirring to complete solution. The epoxy resin solution was allowed to cool to room temperature before adding the acrylate syrup, additional free radical photoinitiator and crosslinking agent. This mixture was coated and cured using a sequential photopolymerization process. The first cure was under visible light irradiation, followed by low intensity ultraviolet irradiation. The irradiated composition was then thermally post-cured.

A partially polymerized isooctyl acrylate syrup was prepared by mixing 40 parts of IOA and 0.02 part of KB-1. The mixture was placed in a container and stirred while nitrogen gas was bubbled through the mixture to exclude oxygen. The mixture was irradiated with low intensity ultraviolet light until a viscous partially polymerized syrup was obtained.

Similarly, in a separate container a partially polymerized isobornyl acrylate syrup was prepared by mixing 5 parts of IBA and 0.0025 part of KB-1. The mixture was placed in a container and stirred while nitrogen gas was bubbled through the mixture to exclude oxygen. The mixture was irradiated with low intensity ultraviolet light until a viscous partially polymerized syrup was obtained having a viscosity in the range of 1000-3000 cps measured on a Brookfield Viscometer using spindle RV6 at a speed of 100.

In a separate container, 10 parts of EPON 1001F and 90 parts of ERL 4221 were heated to 150°C for 30 minures and allowed to mix. The mixture was cooled to 60°C while stirring, then 0.5 part of Cp(Xyl)FeSbF₆ was added in the dark. The epoxy mixture was stirred until the catalyst dissolved and then the mixture was allowed to cool to room temperature.

In a separate container, and in the dark, were mixed 55 parts of the epoxy mixture, then 40 parts of the partially polymerized IOA syrup, 5 parts of the partially polymerized IBA syrup, 0.22 part of KB-1 and 0.16 part of HDDA. This mixture, stirred to insure complete mixing of the components, was then evacuated in a metal bell jar to remove oxygen and bubbles.

The resultant composition was knife coated to a a wet coating film thickness of about 50 micrometers between two sheets of polyester previously coated with a silicone release layer . The coated sandwich was passed through two (2) irradiation zones. Zone 1 was an approximately 0.60 m section and heated to 80 to 90°C. The zone had two 500 watt quartz/halogen lamps as the light sources. Zone 2 was an approximately 3.7 m section and had low intensity ultraviolet lights. The coating speed was approximately 43 cm·min⁻¹. After passing through the two exposure zones, the samples were post-cured at 100°C for 15 minutes.

The epoxy-acrylate resin was evaluated as in Comparative Example 1 and the results are summarized in Tables 4 and 5.

### Comparative Examples C2-C5

Epoxy-acrylate thermoset resins were prepared according to the procedure described Comparative Example C1 using the components and amounts summarized in Tables 1A and 1B:

**Table 1A**

| Examples | Acrylate Syrup | | Epoxy Mixture | | |
|---|---|---|---|---|---|
| | IOA | IBA | ERL4221 | EPON 1001F | CpXyIFeSbF₆ |
| C2 | 30 | 15 | 49.5 | 5.5 | 0.27 |
| C3 | 22.5 | 22.5 | 49.5 | 5.5 | 0.27 |
| C4 | 15 | 30 | 49.5 | 5.5 | 0.27 |
| C5 | 5 | 40 | 49.5 | 5.5 | 0.27 |

**Table 1B**

| Examples | Epoxy-Acrylate Mixture | | | |
|---|---|---|---|---|
| | Acrylate Syrup | Epoxy Mixture | HDDA | KB-1 |
| C2 | 45 | 55 | 0.09 | 0.22 |
| C3 | 45 | 55 | 0.09 | 0.22 |
| C4 | 45 | 55 | 0.09 | 0.22 |
| C5 | 45 | 55 | 0.09 | 0.22 |

### Examples 6-10

These examples describe the preparation of epoxy-acrylate compositions wherein the epoxy component was thermally polymerized and the acrylate component was photopolymerized. The specific components and amounts are summarized in Table 2. The samples were evaluated for damping characteristics using a Seiko DMS 110 rheometer and the results are summarized in Tables 4 and 5.

Acrylate syrups and epoxy mixtures were prepared according to the proceedure described in detail in Comparative Example 1. The epoxy component was added to the acrylate syrups in the ratios identical to those used in Comparative Examples C1-C5.

Each sample was prepared by dissolving 0.275 parts of Cp₂FeSbF₆ in several drops of methyl sulfolane. 0.275 parts of DEOT and 0.225 parts of KB-1 were then added to the solution. An epoxy-acrylate mixture prepared using the components and amounts summarized in Table 2 was added to the solution of initiators. The composition was then stirred, degassed and knife-coated as described in Example C1. The coating was then cured for four minutes at 100°C, followed by exposure to low intensity UV lights for 5 minutes. The partially polymerized ("B-staged") film was laminated between two pieces of 0.3 mm (0.012") thick steel by subjecting the film to 100°C for 2 minutes and brought to a final cure in a rheometer between -80° and 260°C using a 10°C/minute heating rate. The material was evaluated in the Seiko DMS 110 20 mm bending fixture using the heating cycle as described in Comparative Example C1 and the results are summarized in Tables 4 and 5.

### Examples 11-15

These examples describe the preparation of epoxy-acrylate compositions wherein both the epoxy component and the acrylate component were thermally polymerized.

Acrylate syrups and epoxy mixtures were prepared according to the proceedure described in detail in Examples 6-10. The epoxy component was added to the acrylate syrups in the ratios identical to those used in Examples 6-10.

The samples were prepared by dissolving the Cp₂FeSbF₆ in several drops of methyl sulfolane, after which the DEOT were added to the solution. An epoxy/acrylate mixture prepared using the components and amounts summarized in Table 2 was added to the solution of initiators.

To this mixture 0.225 parts of Trigonox-29 were added. The composition was then stirred and degassed as in Example 6. The degassed mixture was rod coated onto an about 75 mm x 75 mm (about 3 inch x 3 inch) steel sheet 0.3 mm (0.012 inch) thick. A similar steel sheet was placed on top of the coated mixture. The resulting laminate was then thermally cured for five minutes at 100°C. The laminate was evaluated in the Seiko DMS 110 in 20 mm bending fixture using the heating cycle described in Example C1 and the results are summarized in Tables 4 and 5.

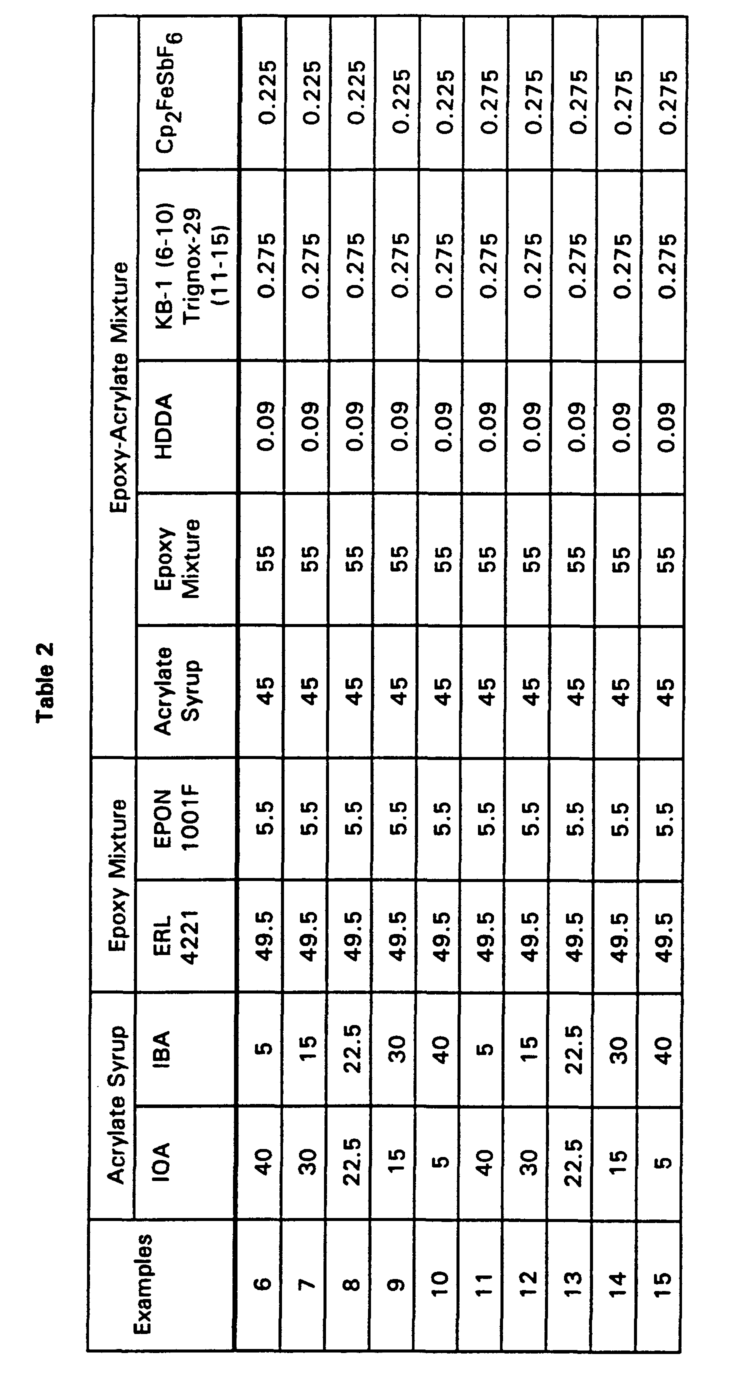

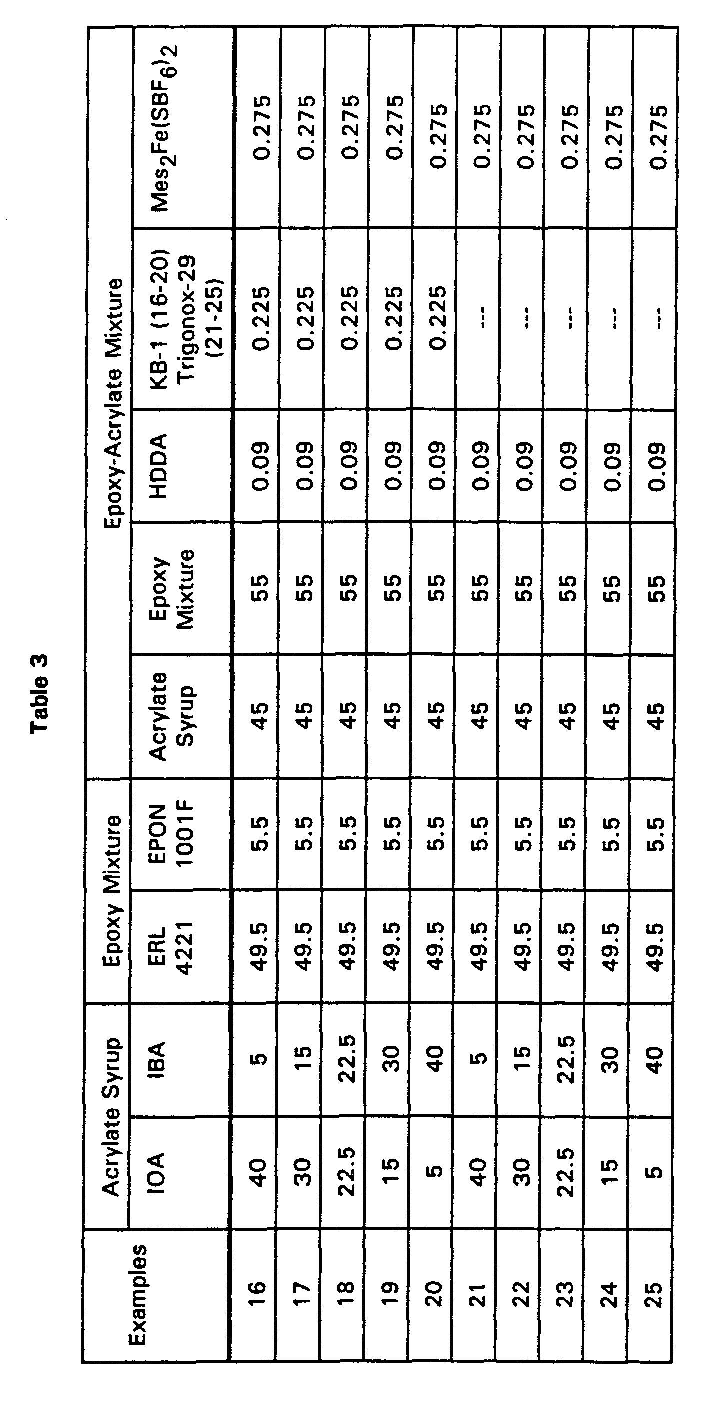

### Examples 16-20

These examples describe the preparation of epoxy-acrylate compositions wherein the epoxy component was thermally polymerized and the acrylate component was photopolymerized.

Acrylate syrups were prepared according to the proceedure described in Example C1. Similarly, the epoxy mixture was prepared as described Example C1. The epoxy component was then added to the acrylate syrups in the ratios identical to those used in Examples C1-C5.

Each sample was prepared by dissolving 0.275 parts of (Mes)₂Fe(SbF₆)₂ in several drops of methyl sulfolane. 0.225 parts of KB-1 were then added to the solution. An epoxy/acrylate mixture prepared the components and amounts summarized in Table 3 was added to the solution of initiators.

The composition was then stirred, degassed and knife coated as described in Example C1. The film was then cured for four minutes at 100°C, followed by exposure to low intensity ultraviolet (UV) lights for 5 minutes. The resulting B-staged film was laminated between two pieces of 0.3 mm (0.012 inch) thick steel and brought to a final cure in a rheometer between -80° and 260°C using a 10°C/minute heating rate. The material was evaluated in the Seiko DMS 110 in 20 mm bending fixture using the heating cycle schedule described in Example C1 and the results are summarized in Tables 4 and 5.

### Examples 21-25

These examples describe the preparation of epoxy-acrylate compositions wherein both the epoxy component and the acrylate component were thermally polymerized.

Acrylate syrups and epoxy mixtures were prepared according to the proceedure described below and in further detail in Example C1. The epoxy component was then added to the acrylate syrups in the ratios identical to those used in Examples 6-10.

Each sample was prepared by dissolving 0.275 parts of (Mes)₂Fe(SbF₆)₂ in several drops of methyl sulfolane. An epoxy/acrylate mixture prepared using the components and amounts summarized in Table 3 was added to the solution of initiators.

To this mixture 0.225 parts of Trigonox-29 were added. The composition was then stirred and degassed as described in Example C1. The degassed mixture was rod coated onto an about 75 X 75 mm (3 inch x 3 inch) steel sheet 0.3 mm (0.012") thick, and a similar sheet was placed on top of the organic layer. The resulting laminate was then cured for five minutes at 100°C. The material was evaluated in the Seiko DMS 110 in 20 mm bending fixture using the heating cycle described in Example C1 and the results are summarized in Tables 4 and 5.

Table 4 shows striking differences in the initial damping performance, as well as in the "annealed" samples. The samples prepared using the catalysis and the cure schedule described in Comparative Examples C1-C5 appear under the "two color" heading. The useful thermal damping ranges of these compositions are narrow, generally not exceeding 20°C wide at tan δ > 0.06. In contrast, using the thermally cured compositions of the present invention, these ranges are greatly expanded, regardless whether the thermal or photo, sequential or simultaneous initiation of the acrylate polymerization are used.

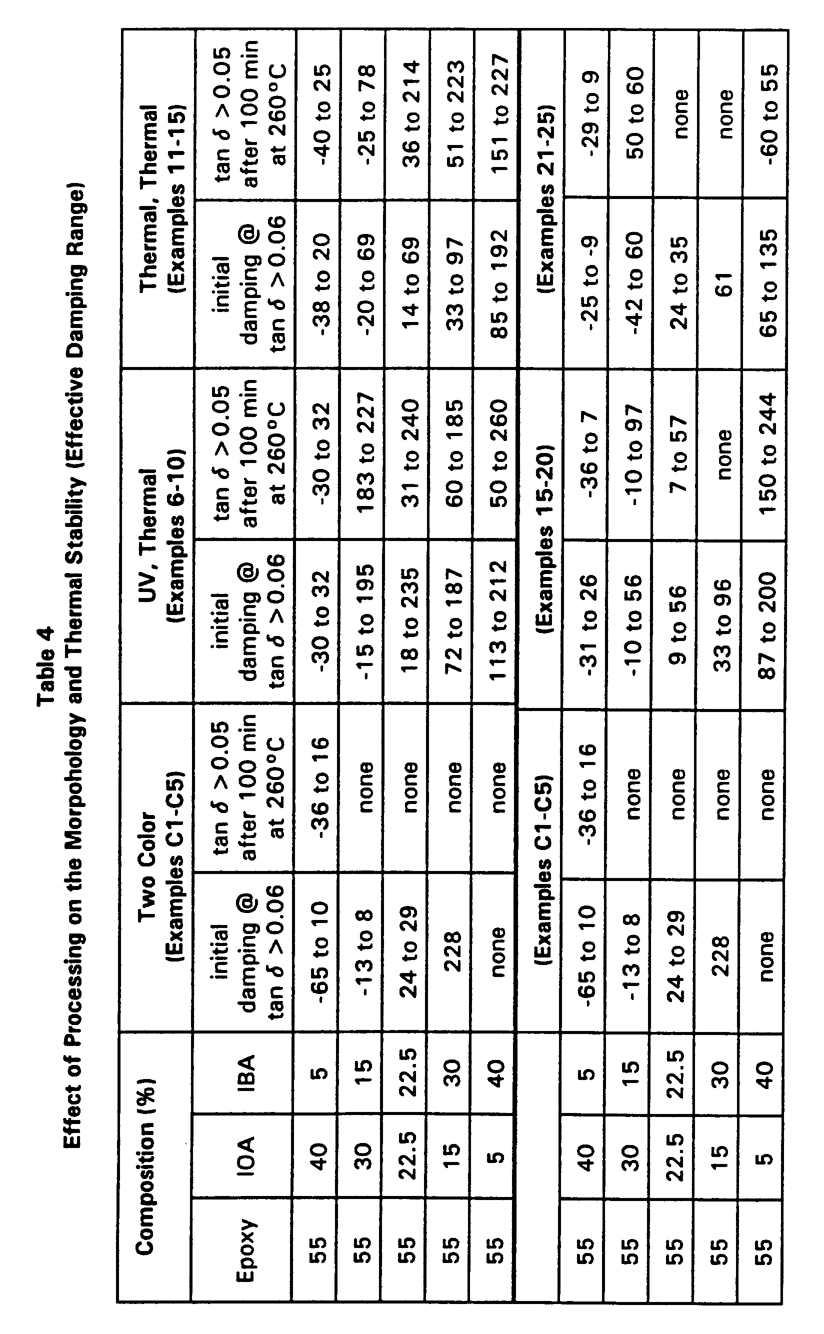

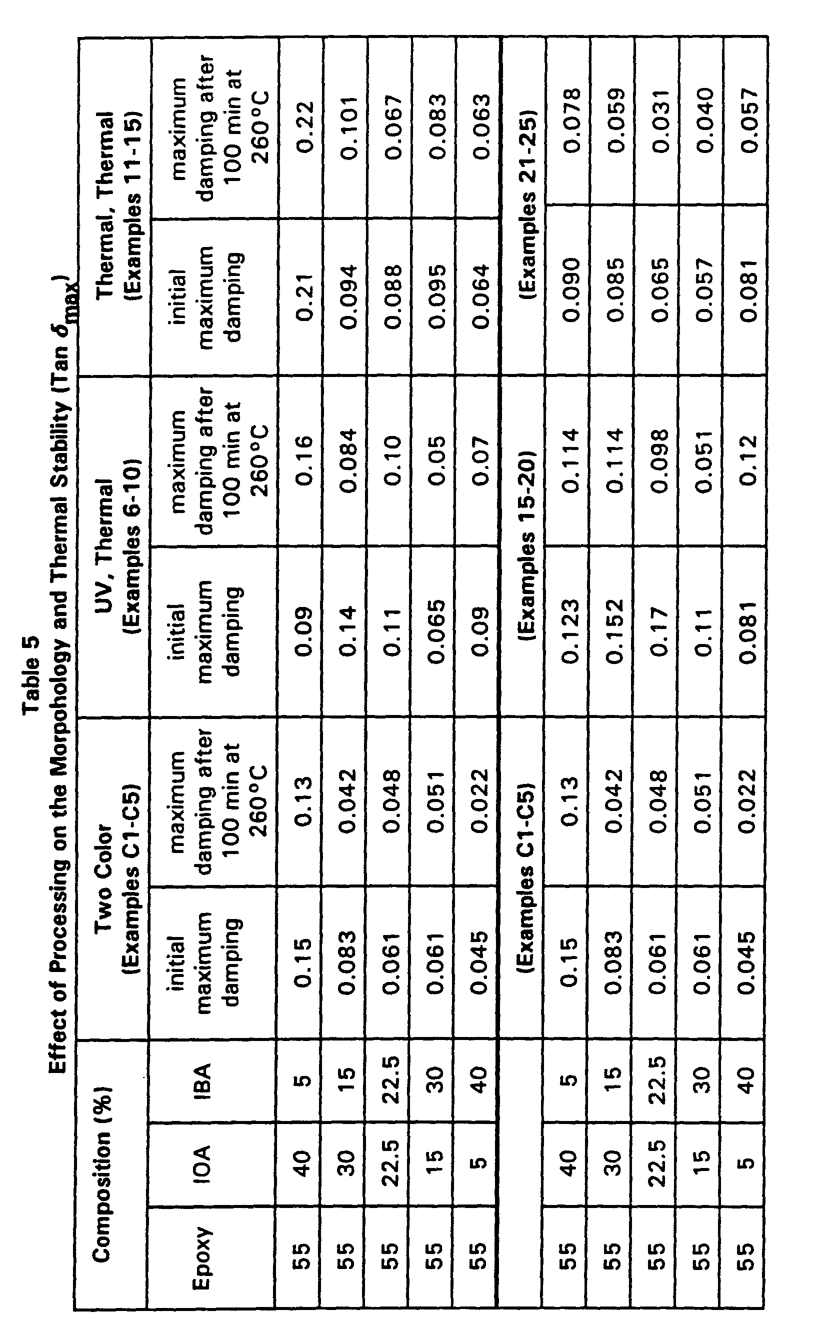

The samples prepared according to the present invention, show superior thermal stability to those polymerized via the two color process. They show minimal or no decrease in damping ability after 100 minute exposure to 260°C, whereas none of the two color materials survived that test. Moreover, only Example C3 survived even a 30 minute exposure to this temperature.

The effect of the prolonged exposure to elevated temperatures can be monitored by tracking the magnitude of the tan δ_{max'} or the peak. In Table 5, the samples prepared by all processes were compared that way.

Tables 4 and 5 demonstrate the multi-color process produced morphologies dominated by the acrylates, as evidenced by the initial prominence of the low temperature peak. Because the contribution to the morphology from the more thermally stable epoxy phase was minimal, these samples degraded after relatively short times at 260°C. Their maximum damping decreased to the point where no peak was discernable over a very low tan δ baseline.

In contrast, many of the samples prepared according to the present invention showed initially wide useful thermal damping ranges and expanded even further after a 100 minute anneal at 260°C. The epoxy rich phase was clearly visible in the dynamic mechanical analysis in the samples prior to the anneal. The epoxy component was intimately mixed with the acrylate on submicron levels to afford the microheterogeneously phase separated morphology in which the high temperature epoxy rich phase thermally protected the acrylate.

### Example 26

A syrup of isobornyl acrylate with a viscosity of about 2000 cps was dissolved in ERL4221 in various ratios from 70/30 to 50/50. The monomeric solutions were then polymerized using a variety of processes with a range of free radical catalysts. DSC results from the 50/50 and 30/70 compositions with cure exotherm peak temperatures and exotherm magnitudes are summarized in Table 6. Other organometallics, such as bis(mesitylene)iron(+2) hexafluoroantimonate do not provide two separate thermal cures for each component. With AIBN and Trigonox-29, DSC scans indicated a single peak for simultaneous cures. Cp₂FeSbF₆ was also unique among the cationic organometallic catalysts in its insensitivity to photolysis.

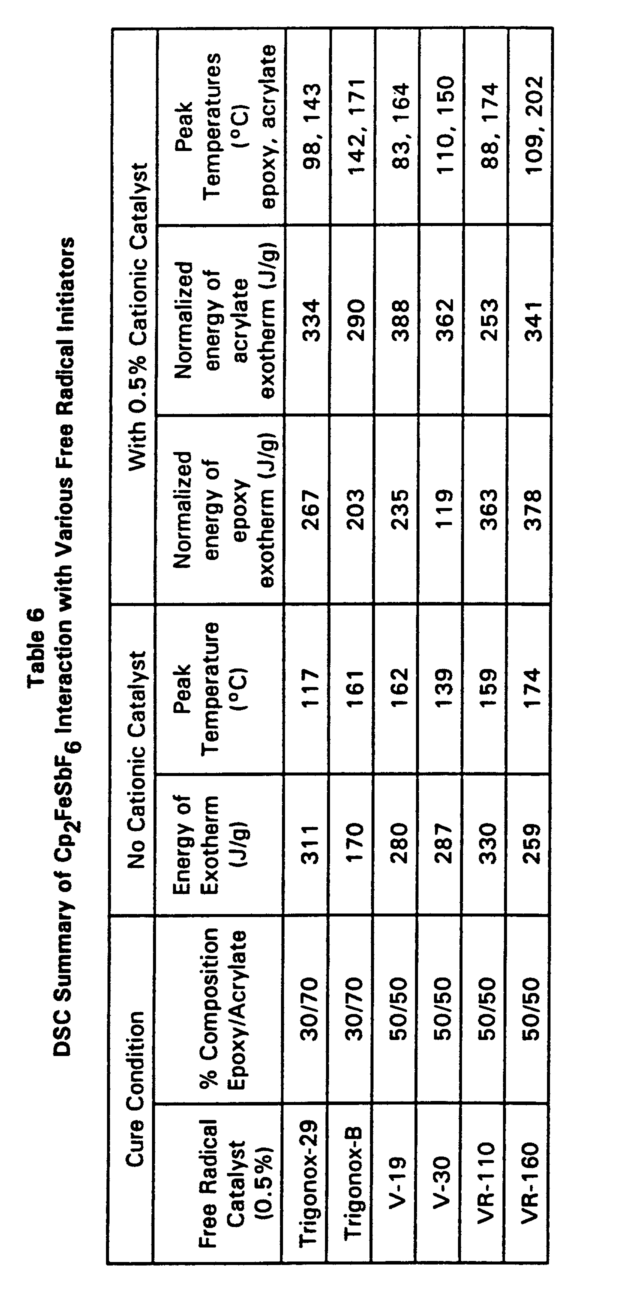

### Example 27

During some all-thermal cure processes, the monomer might be exposed to air. To monitor the acrylic weight loss due to the monomer evaporation versus the polymerization, these conditions were simulated by curing thin monomeric layers spread as open faced sandwiches on steel plates. Extreme thermal conditions were chosen to demonstrate the compositions can withstand severe temperatures with minimal weight loss even during such cures. The samples were heated to 210°C, a temperature about 65°C below the boiling point of the acrylate. They were cured in the hood with an air flow at 125 ft/min, further aiding the monomer evaporation.

Six monomer samples were prepared as described in Example 26, coated and weighed. They were then "B-staged" at 100°C in the hood for 90 seconds to cure the epoxy and weighed again. The results in Table 7 summarize the relative weight losses of the samples after the first temperature bump. The samples were then reheated at 210°C for 10 minutes to polymerize the acrylate. The samples were then cooled and weighed for the final time to measure the total weight loss. Under the extreme conditions and without any cure optimizing, only 20% weight loss was observed with three free-radical catalysts.

**Table 7**

| **Monomer Weight Loss** **with Various Free Radical Initiators** **During an Open Face Cure** | | | | | | |
|---|---|---|---|---|---|---|
| FR Initiator Used | VR-160 | VR-100 | TRIG-B | TRIG29 | V19 | V30 |
| Net Monomer Wt (*initial weight*) | 0.8730 | 0.9953 | 0.7304 | 0.9517 | 1.0722 | 0.8480 |
| Weight Loss afte r 1st Bump | 0.1139 | 0.1048 | 0.1352 | 0.1186 | 0.0954 | 0.0967 |
| Weight Loss after 2nd Bump | 0.2200 | 0.2096 | 0.2575 | 0.1897 | 0.2102 | 0.2597 |
| %Total Wt Loss | 25.20 | 21.06 | 35.25 | 19.93 | 19.60 | 30.63 |

### Examples 28-30

The various samples are useful in illustrating the present invention. A polymerization composition of IBA/ERL4221 with 0.5% by weight of the cationic catalyst system and 0.5% by weight of a free radical initator was prepared and the morphology was altered by adjusting various conditions and components. The system was rendered completely miscible and completely phase separated. The following examples illustrate how a variety of morphologies in between can be prepared with the control allowed by the present invention.

Two types of samples were prepared. The first set was photoinitated using KB-1 in the UV between two release liners to polymerize the acrylate phase first. The samples were then prepared by placing the resulting free standing film between two plates of steel and heat curing the epoxy phase at 200°C for 30 minutes. These were the "control" samples.

The second set of samples were further divided into the "simultaneous" and "sequential" curing processes. In the case of sequential curing, the epoxy phase was first cured at 100°C. Then the free radical catalyst was "released" by heating the sample at the temperature characteristic for the 10 hour half life of a given initiator, typically in the range between 130 and 220°C.

The "simultaneous" category samples were prepared as follows: the monomer with the added catalysts was coated between two steel sheets. The sandwich was then placed in an oven at 200°C for 10 minutes.

Under the first processing conditions, the monomeric mixture with KB-1 added as the UV sensitive free radical initiator was knife coated between two transparent plastic sheets and irradiated in near UV for 5 minutes to cure the acrylate first. Subsequently, the UV cured film was removed and sandwiched between rigid constraining layers. The construction was then heat cured at 200°C for 10 minutes. Reviewing the results summarized in Tables 8-10, the DMA results indicate the morphology of the compositions were governed by acrylate thermal transitions, that is, the epoxy phase played no visible role in the resulting morphology. In Tables 8-10 the notation "UV" indicates a photocure, and "HT" indicates a thermal cure.

However, if the minor epoxy component was thermally polymerized first, the damping range of the sample row shift to much higher temperatures. Moreover, the transition spans a broader range. This type of morphogical differences are best illustrated by the comparison of the UVHT 40/60 sample in the Table 8 (Run 1), with some of the HTHT 40/60 samples.

**Table 8**

| **Effect of Processing and Catalysis on Morphology** **50:50 IBA:ERL-4221 composition (Example 28)** | | | | | | | | |
|---|---|---|---|---|---|---|---|---|
| UV:KB-1, HT | | | HT:VR-110, HT | | | HT:VR-160, HT | | |
| Run # | tan δ > 0.06 | Δ | Run # | tan δ > 0.06 | Δ | Run # | tan δ > 0.06 | Δ |
| S1:1 | 80-110 148-196 | 78 | 1 | 58-75 82-172 | 107 | 1 | 70-135 | 65 |
| S1:2 | 80-115 177-196 | 64 | 2 | 112-191 | 79 | 2 | 80-140 | 60 |
| S2:1 | 79-153 | 74 | 3 | 118-193 | 75 | 3 | 82-147 | 63 |

**Table 9a**

| **Effect of Processing and Catalysis on Morphology** **60:40 IBA:ERL-4221 composition (Example 29)** | | | | | | | | |
|---|---|---|---|---|---|---|---|---|
| UV:KB-1, HT | | | HT:VR-110, HT | | | HT:VR-160, HT | | |
| Run # | tan δ > 0.06 | Δ | Run # | tan δ > 0.06 | Δ | Run # | tan δ > 0.06 | Δ |
| 1 | 45-85 | 40 | 1 | 67-120 | 57 | 1 | 92-153 | 61 |
| 2 | 52-97 | 45 | 2 | 77-129 | 52 | 2 | 116-166 | 50 |
| 3 | 59-106 | 47 | --- | -- | --- | 3 | 118-175 | 57 |
| 4 | 58-107 | 49 | --- | --- | --- | --- | --- | --- |

**Table 9b**

| Simultaneous Thermal | | | HT: Trigonox B, HT | | | HT: Trigonox-29, HT | | |
|---|---|---|---|---|---|---|---|---|
| Run # | tan δ > 0.06 | Δ | Run # | tan δ > 0.06 | Δ | Run # | tan δ > 0.06 | Δ |
| S1:1 | 47-166 | 119 | 1 | 82-132 | 50 | 1 | 86-131 | 45 |
| S1:2 | 65-152 | 87 | 2 | 79-149 | 70 | 2 | 88-137 | 49 |
| S2:1 | 62-140 | 78 | --- | --- | --- | --- | --- | --- |
| S2:2 | 61-90 | 29 | --- | --- | --- | --- | --- | --- |

**Table 9c**

| HT:V-30, HT | | | HT:VR-19, HT | | |
|---|---|---|---|---|---|
| Run # | tan δ > 0.06 | Δ | Run # | tan δ > 0.06 | Δ |
| 1 | 53-124 | 71 | 1 | 52-132 | 80 |
| 2 | 56-129 | 73 | 2 | 51-133 | 82 |

**Table 10a**

| **Effect of Processing and Catalysis on Morphology** **30:70 IBA:ERL-4221 Composition (Example 30)** | | | | | |
|---|---|---|---|---|---|
| UV:KB-1, HT | | | Simultaneous Thermal | | |
| Run # | tan δ > 0.06 | Δ | Run # | tan δ > 0.06 | Δ |
| 1 | 85-122 | 37 | 1 | 87-136 | 49 |
| 2 | 84-123 | 39 | 2 | 88-156 | 68 |

**Table 10b**

| HT:VR-110, HT | | | HT:VR-160, HT | | |
|---|---|---|---|---|---|
| Run # | tan δ > 0.06 | Δ | Run # | tan δ > 0.06 | Δ |
| S1:1 | 56-117 | 61 | 1 | 50-139 | 89 |
| S1:2 | 63-128 | 78 | 2 | 78-139 | 61 |
| S2:1 | 66-144 | 65 | --- | --- | --- |
| S2:2 | 76-140 | 64 | --- | --- | --- |

## Claims

1. A vibration damping construction comprising:
a) a first substrate;
b) a cured viscoelastic layer coated on at least one surface of the first substrate, the cured viscoelastic layer being obtainable from a curable composition comprising a mixture of at least one free radically polymerizable monomer, at least one epoxy functional resin, at least one free radical polymerization initiator, a thermally-initiated cationic catalyst system comprising at least one salt of an organometallic cation and at least one stabilizing additive having segments or central nucleus of a formula selected from the group consisting of 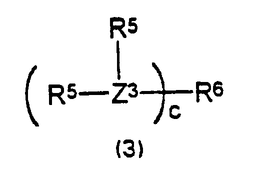 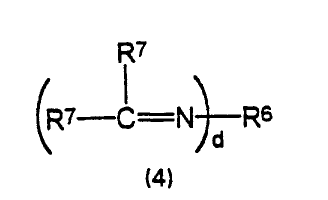 wherein
Z³ is nitrogen, phosphorous, arsenic or antimony;
R⁵ is a radical moiety that can be the same or different and is selected from substituted and unsubstituted C₁ to C₁₀ alkyl groups, substituted and unsubstituted groups of one to four aromatic rings, wherein two to four rings can be fused or unfused rings;
R⁷ is hydrogen or R⁵;
R⁶ is R⁵ or a divalent group (as when c or d = 2) selected from alkylene having 3 to 10 carbon atoms and phenylene groups; furthermore when R⁶ is R⁵, R⁵ and R⁶ can be taken together to form a cyclic ring having 5 to 7 ring atoms;
c is 1 or 2; and
d is 1 or 2;
further wherein when cured the curable mixture provides a vibration damping material with an interpenetrating network comprising a semiphase separated morphology; and
c) optionally, a second substrate positioned over the viscoelastic layer such that the viscoelastic layer is sandwiched between the first and second substrates.

2. The vibration damping construction according to claim 1, wherein the curable composition further comprises at least one mono- or poly-hydroxyl containing material.

3. The vibration damping construction according to claim 1 wherein the free radically polymerizable monomers are acrylates or methacrylates.

4. The vibration damping construction according to claim 1 wherein the free radically polymerizable monomers are partially polymerized.

5. The vibration damping construction according to claim 1 wherein the free radical polymerization initiator is either thermally or photochemically initiated.

6. The vibration damping construction according to claim 1, wherein the salt of an organometallic cation has an organometallic cation selected from a class of substituted and unsubstituted aromatic compounds based on a benzene or cyclopentadienyl nucleus, the metal is a transition metal and the anion is tetrafluoroborate, hydroxypentafluoroantimonate, trifluoromethanesulfonate, hexafluorophosphate, hexafluoroarsenate, or hexafluoroantimonate.

7. The vibration damping construction according to claim 1 further comprising additional adjuvants.

8. A method for preparing a vibration and sound absorbing construction comprising the steps of:
(1) providing a first substrate;
(2) preparing a curable mixture as described in claim 1 comprising (a) at least one acrylate and/or methacrylate, (b) at least one epoxy functional resin, (c) at least one free radical polymerization initiator, and (d) thermally-initiated catalyst system comprising
(i) a salt of an organometallic cation having the formula;
[(L¹)ₘ(L²)ₚM]^{+q}Xₙ
wherein:
M is selected from the group consisting of Cr, Mo, W, Mn, Re, Fe, Ru, and Os;
L¹ represents ligands contributing π-electrons that can be selected from substituted and unsubstituted aromatic compounds and substituted and unsubstituted heterocyclic aromatic compounds, and capable of contributing six π-electrons to the valence shell of M;
L² represents ligands contributing π-electrons that can be selected from substituted and unsubstituted cyclopentadienyl and indenyl anions, and capable of contributing six π-electrons to the valence shell of M;
m and p are integers having a value of O or 2, such that, when m is equal to 2, each L¹ may be the same or different ligands and p is equal to O; and when p is equal to 2, each L² may be the same or different ligands and m is equal to 0, provided the sum of (m + p) is equal to 2;
q is an integer having a value of 1 or 2, and represents the residual charge of the complex cation;
X is an anion selected from organic sulfonate anions selected from the group consisting of CH₃SO₃⁻, CF₃SO₃⁻, C₆H₅SO₃⁻, p-toluenesulfonate, p-chlorobenzenesulfonate and related isomers, and halogen-containing complex anions of a metal or metalloid selected from the group consisting of BF₄⁻, AsF₆⁻, PF₆⁻, SbF₅OH⁻, SbF₆⁻, and CF₃SO₃⁻; and
n is an integer having a value of 1 or 2, and represents the number of complex anions required to neutralize the charge q on the complex cation; and
(ii) a stabilizing additive as described in claim 1;
(3) coating the curable mixture onto the first substrate;
(4) exposing the coating to energy to partially cure component (a) by activating the free radical initiator;
(5) laminating the partially cured coating between the first substrate, and a second substrate; and
(6) exposing the laminate to a temperature sufficient to cure component (b) to provide a fully cured coating laminated between the first and second substrates.

9. The method according to claim 8 wherein the free radically polymerizable monomer is partially polymerized prior to the polymerization of the epoxy functional resin.

10. The method according to claim 9 wherein each free radically polymerizable monomer is separately partially polymerized and then mixed together before adding one or more epoxy functional resins.

11. The method according to claim 10 wherein the free radically polymerizable monomers are exposed to irradiation energy level to effectively partially polymerize the monomers.

12. The method according to claim 10 wherein the free radically polymerizable monomers are subjected to a temperature sufficient to partially polymerize the monomers.

13. The method according to claim 8 wherein the first substrate is a releasable carrier web, wherein component (a) is partially cured, and then laminated onto a second substrate, after which the releasable carrier web is removed and a third substrate is added to form a sandwich with the viscoelastic material between the second and third substrate.

## Patentansprüche

1. Schwingungsdämpfende Konstruktion, umfassend:
a) ein erstes Substrat;
b) eine gehärtete viskoelastische Schicht, welche auf mindestens einer Oberfläche des ersten Substrats beschichtet ist, wobei die gehärtete viskoelastische Schicht aus einer härtbaren Zusammensetzung erhältlich ist, welche ein Gemisch umfasst aus mindestens einem radikalisch polymerisierbaren Monomer, mindestens einem Epoxy-funktionellen Harz, mindestens einem radikalischen Polymerisationsinitiator, einem durch Wärme initiierten kationischen Katalysatorsystem, welches mindestens ein Salz eines metallorganischen Kations und mindestens einen stabilisierenden Zusatzstoff umfasst, wobei der stabilisierende Zusatzstoff Segmente oder einen Zentralkern einer Formel aufweist, welche ausgewählt ist aus 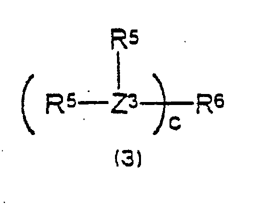 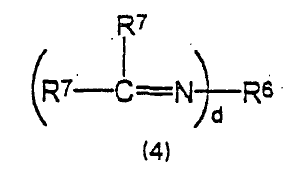 wobei
Z³ ein Stickstoff-, Phosphor-, Arsen- oder Antimonatom ist,
R⁵ eine Radikaleinheit ist, welche gleich oder verschieden sein kann und ausgewählt ist aus substituierten und unsubstituierten C₁-C₁₀-Alkykesten, substituierten und unsubstituierten Resten mit einem bis vier aromatischen Ringen, wobei zwei bis vier Ringe kondensierte oder nicht-kondensierte Ringe sein können;
R⁷ ein Wasserstoffatom oder R⁵ ist;
R⁶ gleich R⁵ oder ein zweiwertiger Rest (wie im Falle c oder d = 2) ist, welcher ausgewählt ist aus einem Alkylenrest mit 3 bis 10 Kohlenstoffatomen und Phenylenresten; ferner wenn R⁶ gleich R⁵ ist, können R⁵ und R⁶ zusammen einen cyclischen Ring mit 5 bis 7 Ringatomen bilden; '
c gleich 1 oder 2 ist; und
d gleich 1 oder 2 ist;
ferner, wobei, wenn es gehärtet ist, das härtbare Gemisch ein schwingungsdämpfendes Material mit einem interpenetrierenden Netzwerk bereitstellt, welches eine Semiphasen-getrennte Morphologie umfasst; und
c) gegebenenfalls ein zweites Substrat, welches über der viskoelastischen Schicht angebracht ist, so dass die viskoelastische Schicht sandwichartig zwischen dem ersten und dem zweiten Substrat vorhanden ist.

2. Schwingungsdämpfende Konstruktion gemäß Anspruch 1, wobei die härtbare Zusammensetzung ferner mindestens ein Mono- oder Polyhydroxyl-enthaltendes Material umfasst.

3. Schwingungsdämpfende Konstruktion gemäß Anspruch 1, wobei die radikalisch polymerisierbaren Monomere Acrylate oder Methacrylate sind.

4. Schwingungsdämpfende Konstruktion gemäß Anspruch 1, wobei die radikalisch polymerisierbaren Monomere teilweise polymerisiert sind.

5. Schwingungsdämpfende Konstruktion gemäß Anspruch 1, wobei der radikalische Polymerisationsinitiator entweder durch Wärme oder photochemisch initiiert wird.

6. Schwingungsdämpfende Konstruktion gemäß Anspruch 1, wobei das Salz eines metallorganischen Kations ein metallorganisches Kation besitzt, welches ausgewählt ist aus substituierten und unsubstituierten aromatischen Verbindungen, welche auf einem Benzol- oder Cyclopentadienylkern basieren, das Metall ein Übergangsmetall ist und das Anion Tetrafluorborat, Hydroxypentafluorantimonat, Trifluormethansulfonat, Hexafluorphosphat, Hexafluorarsenat oder Hexafluorantimonat ist.

7. Schwingungsdämpfende Konstruktion gemäß Anspruch 1, welche ferner weitere Zusatzstoffe umfasst.

8. Verfahren zur Herstellung einer schwingungs- und schalldämpfenden Konstruktion, welches folgende Schritte umfasst:
(1) Bereitstellen eines ersten Substrats;
(2) Herstellen eines härtbaren Gemischs wie in Anspruch 1 beschrieben, welches (a) mindestens ein Acrylat und/oder Methacrylat, (b) mindestens ein Epoxyfunktionelles Harz, (c) mindestens einen radikalischen Polymerisationsinitiator und (d) ein wärme-initiiertes Katalysatorsystem umfasst, welches umfasst
(i) ein Salz eines metallorganischen Kations der Formel
[(L¹)ₘ(L²)ₚM]^{+q}Xₙ
wobei
M ausgewählt ist aus Cr, Mo, W, Mn, Re, Fe, Ru und Os;
L¹ π-Elektronen beisteuernde Liganden darstellt, welche ausgewählt sein können aus substituierten und unsubstituierten aromatischen Verbindungen und substituierten und unsubstituierten heterocyclischen aromatischen Verbindungen, und welche für das Beisteuern von sechs π-Elektronen in die Valenzschale von M geeignet sind;
L² π-Elektronen beisteuernde Liganden darstellt, welche ausgewählt sein können aus substituierten und unsubstituierten Cyclopentadienyl- und Indenylanionen, und welche für das Beisteuern von sechs π-Elektronen in die Valenzschale von M geeignet sind;
m und p ganze Zahlen mit einem Wert von 0 oder 2 sind, so dass, wenn m gleich 2 ist, L¹ jeweils gleiche oder verschiedene Liganden sein können und p gleich 0 ist; und wenn p gleich 2 ist, L² jeweils gleiche oder verschiedene Liganden sein können und m gleich 0 ist, mit der Maßgabe, dass die Summe von (m + p) gleich 2 ist;
q eine ganze Zahl mit einem Wert von 1 oder 2 ist und die Restladung des Komplex-Kations ist;
X ein Anion ist, welches ausgewählt ist aus organischen Sulfonatanionen, welche ausgewählt sind aus CH₃SO₃⁻, CF₃SO₃⁻, C₆H₅SO₃⁻, p-Toluolsulfonat, p-Chlorbenzolsulfonat und verwandte Isomere, und Halogen-enthaltende Komplex-Anionen eines Metalls oder eines Metalloids, welche ausgewählt sind aus BF₄⁻, AsF₆⁻, PF₆⁻, SbF₅OH⁻, SbF₆⁻ und CF₃SO₃⁻; und
n eine ganze Zahl mit einem Wert von 1 oder 2 und die Anzahl der Komplex-Anionen ist, welche benötigt werden, um die Ladung q auf dem Komplex-Kation zu neutralisieren; und
(ii) einen stabilisierenden Zusatzstoff wie in Anspruch 1 beschrieben;
(3) Auftragen des härtbaren Gemischs auf das erste Substrat;
(4) Energieaussetzen der Beschichtung, um den Bestandteil (a) durch Aktivierung des radikalischen Polymerisationsinitiators teilweise zu härten;
(5) Laminieren der teilweise gehärteten Beschichtung zwischen dem ersten Substrat und einem zweiten Substrat; und
(6) Temperaturaussetzen des Laminats, wobei die Temperatur ausreicht, um den Bestandteil (b) zu härten, um eine vollständig gehärtete Beschichtung bereitzustellen, welche zwischen dem ersten und dem zweiten Substrat laminiert ist.

9. Verfahren gemäß Anspruch 8, wobei das radikalisch polymerisierbare Monomer vor der Polymerisation des Epoxy-funktionellen Harzes teilweise polymerisiert wird.

10. Verfahren gemäß Anspruch 9, wobei jedes radikalisch polymerisierbare Monomer vor der Zugabe eines oder mehrerer Epoxy-funktionellen Harze getrennt teilweise polymerisiert wird und anschließend zusammengemischt wird.

11. Verfahren gemäß Anspruch 10, wobei die radikalisch polymerisierbaren Monomere einem Bestrahlungsenergieniveau ausgesetzt werden, um die Monomere wirksam teilweise zu polymerisieren.

12. Verfahren gemäß Anspruch 10, wobei die radikalisch polymerisierbaren Monomere einer Temperatur ausgesetzt werden, welche ausreicht, um die Monomere teilweise zu polymerisieren.

13. Verfahren gemäß Anspruch 8, wobei das erste Substrat eine abtrennbare Trägerbahn ist, wobei der Bestandteil (a) teilweise gehärtet ist und anschließend auf einem zweiten Substrat laminiert wird, und wonach die abtrennbare Trägerbahn entfernt wird und ein drittes Substrat zugegeben wird, um ein Sandwich mit dem viskoelastischen Material zwischen dem zweiten und dritten Substrat zu bilden.

## Revendications

1. Structure amortissant les vibrations comprenant :
a) un premier substrat ;
b) une couche viscoélastique durcie sur au moins une surface du premier substrat, la couche viscoélastique durcie pouvant être obtenue à partir d'une composition durcissable comprenant un mélange d'au moins un monomère polymérisable par voie radicalaire, au moins une résine à fonctionnalité époxy, au moins un amorceur de polymérisation radicalaire, un système de catalyseur cationique initié thermiquement comprenant au moins un sel d'un cation organométallique et au moins un additif stabilisant ayant des segments ou un noyau central de formule choisie dans le groupe constitué de 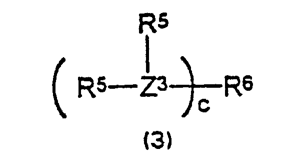 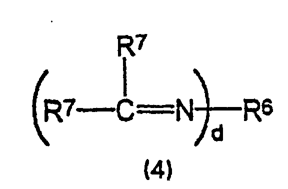 dans lesquelles
Z³ est un atome d'azote, de phosphore, d'arsenic ou d'antimoine ;
R⁵ sont des fragments radicalaires qui peuvent être identiques ou différents et sont choisis parmi les groupes alkyle en C₁ à C₁₀ substitués et non substitués, les groupes substitués et non substitués, ayant de un à quatre cycles aromatiques, dans lesquels deux à quatre cycles peuvent être des cycles fusionnés ou non fusionnés ;
R⁷ est un atome d'hydrogène ou R⁵ ;
R⁶ est R⁵ ou un groupe divalent (lorsque c ou d = 2) choisi parmi les groupes alkylène ayant de 3 à 10 atomes de carbone et phénylène ; en outre lorsque R⁶ est R⁵, R⁵ et R⁶ peuvent être pris ensemble pour former un noyau cyclique ayant de 5 à 7 atomes de cycle ;
c est 1 ou 2 ; et
d est 1 ou 2 ;
en outre, lorsqu'il est durci, le mélange durcissable fournit un matériau d'amortissement des vibrations avec un réseau d'interpénétration comprenant une morphologie séparée en semi-phases ; et
c) éventuellement, un second substrat positionné sur la couche viscoélastique de sorte que la couche viscoélastique soit en sandwich entre les premier et second substrats.

2. Structure amortissant les vibrations selon la revendication 1, dans laquelle la composition durcissable comprend en outre au moins un matériau contenant un mono- ou polyhydroxyle.

3. Structure amortissant les vibrations selon la revendication 1 dans laquelle les monomères polymérisables par voie radicalaire sont des acrylates ou méthacrylates.

4. Structure amortissant les vibrations selon la revendication 1 dans laquelle les monomères polymérisables par voie radicalaire sont partiellement polymérisés.

5. Structure amortissant les vibrations selon la revendication 1 dans laquelle l'amorceur de polymérisation radicalaire est initié thermiquement ou photochimiquement.

6. Structure amortissant les vibrations selon la revendication 1, dans laquelle le sel d'un cation organométallique a un cation organométallique choisi dans une classe de composés aromatiques substitués et non substitués sur la base d'un noyau benzène ou cyclopentadiényle, le métal est un métal de transition et l'anion est le tétrafluoroborate, l'hydroxypentafluoroantimoniate, le trifluorométhanesulfonate, l'hexafluorophosphate, l'hexafluoroarséniate ou l'hexafluoroantimoniate.

7. Structure amortissant les vibrations selon la revendication 1 comprenant en outre des adjuvants additionnels.

8. Procédé de préparation d'une structure amortissant les vibrations et le son comprenant les étapes consistant à :
(1) prendre un premier substrat ;
(2) préparer un mélange durcissable selon la revendication 1 comprenant (a) au moins un acrylate et/ou méthacrylate, (b) au moins une résine à fonctionnalité époxy, (c) au moins un amorceur de polymérisation radicalaire, et (d) un système de catalyseur initié thermiquement comprenant
(i) un sel d'un cation organométallique ayant la formule :
[(L¹)ₘ(L²)ₚM]^{+q}Xₙ
dans laquelle :
M est choisi dans le groupe constitué de Cr, Mo, W, Mn, Re, Fe, Ru et Os ;
L¹ représente des ligands apportant une contribution d'électrons π qui peuvent être choisis parmi les composés aromatiques substitués et non substitués et les composés aromatiques hétérocycliques substitués et non substitués, et capables d'apporter une contribution de six électrons π à la couche de valence de M ;
L² représente des ligands apportant une contribution d'électrons π qui peuvent être choisis parmi les anions cyclopentadiényle et indényle substitués et non substitués et capables d'apporter une contribution de six électrons π à la couche de valence de M ;
m et p sont des entiers ayant une valeur de 0 ou 2 de sorte que, lorsque m est égal à 2, chaque L¹ peut représenter des ligands identiques ou différents et p être égal à 0 ; et lorsque p est égal à 2, chaque L² peut représenter des ligands identiques ou différents et m être égal à 0, à condition que la somme de (m + p) soit égale à 2 ;
q est un entier ayant une valeur de 1 ou 2, la charge résiduelle du cation complexe ;
X est un anion choisi parmi les anions sulfonate organiqueschoisis dans le groupe constitué de CH₃SO₃⁻, CF₃SO₃⁻, C₆H₅SO₃⁻, p-toluènesulfonate, p-chlorobenzènesulfonate et les isomères apparentés, et les anions complexes contenant un halogène d'un métal ou d'un métalloïde choisi dans le groupe constitué de BF₄⁻, AsF₆⁻, PF₆⁻, SbF₅OH⁻, SbF₆⁻ et CF₃SO₃⁻ ; et
n est un entier ayant une valeur de 1 ou 2, le nombre d'anions complexes nécessaire pour neutraliser la charge q du cation complexe ; et
(ii) un additif stabilisant tel que décrit dans la revendication 1
(3) déposer le mélange durcissable sur le premier substrat ;
(4) exposer le revêtement à de l'énergie pour durcir partiellement le composant (a) par activation de l'amorceur de radicaux libres ;
(5) stratifier le revêtement partiellement durci entre le premier substrat et un second substrat ; et
(6) exposer le stratifié à une température suffisante pour durcir le composant (b) pour obtenir un revêtement complètement durci stratifié entre les premier et second substrat.

9. Procédé selon la revendication 8 dans lequel le monomère polymérisable par voie radicalaire est partiellement polymérisé avant la polymérisation de la résine à fonctionnalité époxy.

10. Procédé selon la revendication 9 dans lequel chaque monomère polymérisable par voie radicalaire est polymérisé partiellement séparément et ensuite mélangé avant d'ajouter une ou plusieurs résines à fonctionnalité époxy.

11. Procédé selon la revendication 10 dans lequel les monomères polymérisables par voie radicalaire sont exposés à un niveau d'énergie de rayonnement pour polymériser effectivement partiellement les monomères.

12. Procédé selon la revendication 10 dans lequel les monomères polymérisables par voie radicalaire sont soumis à une température suffisante pour polymériser partiellement les monomères.

13. Procédé selon la revendication 8 dans lequel le premier substrat est un tissu support amovible, dans lequel le composant (a) est partiellement durci, et ensuite stratifié sur un second substrat, après quoi le tissu support amovible est retiré et on ajoute un troisième substrat pour former un sandwich avec le matériau visco-élastique entre le second et le troisième substrat.
